# EUROPÄISCHE PATENTANMELDUNG

(11) **EP 4 505 866 A1**
(43) Veröffentlichungstag der Anmeldung: **12.02.2025**
(21) Anmeldenummer: 24193307.6
(22) Anmeldetag: 07.08.2024
(51) Int. Cl.: A01G 13/02, C08L 67/02, C08L 67/04

(54) **MODIFIZIERTE HUMINSTOFFE UND IHRE VERWENDUNG**

(30) Priorität: 09.08.2023 DE 102023121221; 06.09.2023 DE 102023123940
(71) Anmelder: Fraunhofer-Gesellschaft zur Förderung der angewandten Forschung e.V., 80686 München (DE)
(72) Erfinder: Die Erfindernennung liegt noch nicht vor
(74) Vertreter: Freiherr von Foullon, Alexander

(57) **Zusammenfassung**

Die Erfindung betrifft einen modifizierten Huminstoffpartikel und seine Verwendung in biologisch abbaubaren Compounds.

## Beschreibung

Die vorliegende Erfindung betrifft das technische Gebiet der Kunststoffherstellung und -verarbeitung, insbesondere der Herstellung und Verarbeitung von biologisch abbaubaren Kunststoffen.

Insbesondere betrifft die vorliegende Erfindung eine Polymermischung, welche modifizierte Huminstoffpartikel enthält, sowie ihre Verwendung.

Weiterhin betrifft die vorliegende Erfindung einen modifizierten Huminstoffpartikel, welcher sich in hervorragender Weise zur Verwendung in biologisch abbaubaren Kunststoffen eignet, sowie seine Verwendung

Schließlich betrifft die vorliegende Erfindung ein Verfahren zur Herstellung von modifizierten Huminstoffpartikeln.

Agrarfolien werden gewöhnlich als konfektionierte Blasfolien auf Basis von Polyethylen hergestellt. Die Folien sind chemisch inert und können über lange Zeiträume hinweg auf Agrarflächen verbleiben und beispielsweise der Unkrautunterdrückung dienen, ohne zu verrotten. Das Folienmaterial selbst ist zumeist mit Rußpigmenten (Carbon Black) schwarz, seltener mit Kreiden oder Kaolin weiß eingefärbt oder ganz ohne Füllung transparent oder transluzent belassen.

Derartige Folien sind, selbst wenn sie ordnungsgemäß am Ende der Vegetationsperiode entfernt werden, Mitverursacher von Bodenkontamination durch mikroplastische Partikel, welche im Rahmen einer allmählichen photo-oxidativen chemischen Degradation sowie auch in Teilen einer durch die Bearbeitung und dem Angriff von Windkräften bedingten mechanischen Degradation gebildet werden. Diese Degradationsmechanismen entsprechen jedoch in keiner Weise einem biologischen Abbau auf molekularer Ebene und die mikroplastischen Partikel verharren, insbesondere spätestens bei Inkorporation in die Bodenmatrix und Ausschluss von photochemisch wirksamem Sonnenlicht, sehr lange in den Böden, wo sie akkumulieren und sich negativ auf die folgenden Ernten auswirken können, wie eine Untersuchung mit künstlich angereicherten Böden zeigt. (Liu et al., Effects of plastic mulch film residues on soil-microbe-plant systems under different soil pH conditions, Chemosphere Volume 267, March 2021, 128901)

Weiterhin ist zu beachten, dass durch die Klimaveränderung nach neueren Untersuchungen die Böden an Bodenkohlenstoff (soil organic carbon) verlieren und es bis Ende des 21. Jahrhunderts Anstrengungen erfordert, diesen zu ersetzten.

In jüngster Zeit werden Agrarfolien auch aus biologisch abbaubaren Kunststoffen gefertigt. Die Folien werden unter dem Einfluss von Mikroorganismen biologisch abgebaut, d.h. sie verrotten, was den Vorteil einer damit verbundenen leichteren Handhabung hinsichtlich der Entsorgung mit sich bringt, denn die gebrauchten Agrarfolien können untergepflügt werden, wobei sie dann einem beschleunigten mikrobiellen Angriff unterworfen sind. Auch können sie von den landwirtschaftlichen Flächen entfernt werden und einem separaten Verrottungsprozess, z.B. in einer Kompostierung, unterworfen werden. Neben biologisch abbaubaren Folien aus Stärkepolymeren sind auch Folien auf Basis von Polylactiden und Copolyestern wie Polybutylensuccinat, Polybutylensuccinat-co-adipat, Polybutylensebacat-co-terephthalat, Polybutylenadipat-co-terephthalat oder Polybutylen-isosorbid-adipatco-terephthalat erhältlich, wobei durch die Steuerung der Zusammensetzung Einfluss auf die Geschwindigkeit des biologischen Abbaus genommen werden kann. So zeichnen sich stärkebasierte Agrarfolien durch einen schnelleren biologischen Abbau aus als zum Beispiel Agrarfolien mit einem hohen Anteil an Polymilchsäure. Dies hängt unter anderem mit dem Mikrobiom der Böden, aber auch mit der Löslichkeit und der mikrobiotischen Verfügbarkeit der jeweiligen Polymere zusammen, da für einen biologischen Abbau die Transportprozesse durch Zellmembranen geschwindigkeitsbestimmend sind. Die genaue Steuerung der Degradation der Ackerfolien, welche eine Voraussetzung für den Schritt des biologischen Abbaus ist, ist zurzeit nur durch die Wahl der Komponenten bestimmt und auch lediglich in Grenzen regelbar.

Bei biologisch abbaubaren Folien werden meist aus Kostengründen Kreiden, seltener aufgrund der festigkeitssteigernden Eigenschaften Talkum oder sogar aus optischen Gründen Kaolin als Füllmaterialien eingesetzt. Jedoch haben alle diese Füllstoffe im Verlauf des Folienabbaus keine Eigenschaften, welche zur Bodenverbesserung beitragen könnten. Im Gegenteil hat gerade das billigste und am häufigsten genutzte Material, nämlich Kreide, mindestens über mehrere Vegetationsperioden hinweg aufgrund ihrer basischen Eigenschaften gegebenenfalls nachteilige Eigenschaften für die Bodenqualität, während Talkum und Kaolin als nicht nützlich und eher kostenintensiv anzusehen sind.

Es gibt daher Bestrebungen, biologisch abbaubaren Polymeren, insbesondere Agrarfolien aus biologisch abbaubaren Polymeren, Stoffe mit bodenverbessernden Eigenschaften zuzumischen, um diese nachteiligen Effekte zu vermeiden oder sogar einen bodenverbessernden Effekt bei Verrottung der Folie zu erzielen.

Eine hochinteressante Klasse von Zusatzstoffen für biologisch abbaubare Kunststoffe sind Huminstoffe, bei welchen es sich um Abbauprodukte von Flora und in Teilen auch der Fauna handelt, welche wichtige bodenphysiologische Aufgaben erfüllen. Huminstoffe werden im Allgemeinen in die Kategorien Humine, welche aus unlöslichen, nicht eindeutig charakterisierbaren Makropolymeren bestehen, Huminsäuren, welche wasserunlöslich, aber alkalilösliche humine Fragmente aufweisen, sowie Fulvinsäuren, bei welchen es sich um auch im Sauren lösliche humine Fragmente handelt, eingeteilt.

Aufgrund der grundsätzlich vielversprechenden Eigenschaften gab es bereits Versuche, Huminstoffe in Polymermischungen einzuarbeiten.

So offenbaren die CN 104 277 391 A und die CN 104 292 600 A fossilbasierte Polymere, nämlich Polyvinylalkohol und Polyethylen-co-vinylalkohol, welche Polymere und Huminstoffe in gleichen Anteilen enthalten und welche mit weiteren Additiven verarbeitet werden. Aufgrund der Verwendung von Vinylalkohol und Vinylacetat sind diese Systeme jedoch empfindlich gegenüber Wasser und nicht geeignet, über längere Zeiträume die notwendigen Festigkeiten, wie sie beispielsweise gemäß DIN ISO 17033 gefordert werden, aufrechtzuerhalten.

Die CN 107 674 448 A offenbart die Verwendung eines Polymerblends aus Polyethylen, Polybutylensuccinat, Polymilchsäure und Polyvinylalkohol, welcher mit Weichmachern, Fasern und Kaliumhumat gefüllt ist. Die CN 104 335 855 A beschreibt einen Schichtaufbau aus Kunststoffharzen und Huminstoffen. Den beiden vorgenannten Patentanmeldungen ist gemein, dass sie entweder fossilbasierte Kunststoffe in großen Mengen enthalten oder aufgrund ihrer Zusammensetzung nicht zur Herstellung von Folien, insbesondere Blasfilmen, geeignet sind bzw. aufgrund fehlender (Reiß-)Festigkeiten nicht maschinell applizierbar sind.

Gemäß der CN 107 325 502 A werden aus einer Kohle mit niedrigem Kohlenrang Huminstoffe gewonnen und mit Acrylaten und Vernetzern hydrophil eingestellt. Mit Polycaprolacton und Polybutylensuccinat sowie weiteren nicht näher spezifizierten Polymeren wird eine Blasfolie hergestellt.

Ein biologisch abbaubares huminhaltiges System wird in der CN 112 266 594 A beschrieben, in welchem Polycaprolacton mit 2 bis 50 Gew.-% Polymilchsäure und 12,5 bis 25 Gew.-% Chitosan unter Zusatz von 3 bis 6 Gew.-% Huminstoffen und eines Peroxids verarbeitet wird. Um biologische Abbaubarkeit zu erzielen, wird mit mindestens 60 Gew.-% fossilem Polycaprolacton gearbeitet.

Darüber hinaus beschreibt die CN 109 306 162 A eine polymilchsäurereiche Blasfolie, welche unter Verwendung von Weichmachern und Huminsäure hergestellt wird.

Die CN 104 893 273 A beschreibt die Verwendung von Polypropylencarbonat als Matrix für Huminstoffe, die auf eine Feinheit von 200 Mesh gesiebt werden. Aufgrund des sehr groben Humin-Anteils sind kostengünstige und dünne Folien nicht produzierbar.

Die Einarbeitung von Huminstoffen biologisch abbaubare Kunststoffe gestaltet sich jedoch schwierig. Es hat sich in Versuchen gezeigt, dass Huminstoffe, insbesondere Huminsäuren und Humine, die aus kunststoffverarbeitender Sicht unangenehme Eigenschaft besitzen, dass sie als Polyelektrolyte zur Aggregation/Flockulation neigen und insbesondere bei der Erzeugung von Blasfilmen und dünnen Folien oder Körpern schon ein einzelnes großes Partikel zu einem Eigenschaftsversagen führt, welches sich in Rissbildung und geringer Bruchdehnung äußert. Aber auch bei massiven Formkörpern treten Minderungen in den mechanischen Eigenschaften auf, da agglomerierte nicht kompatible Partikel auch hier als riss- und brucheinleitend wirken und das optische Erscheinungsbild im Allgemeinen verschlechtern.

Als Beispiel für die Agglomerations- bzw. Flockulationsneigung ist insbesondere die Verwendung von alkalischen Humatlösungen zu nennen. Aus einer solchen Lösung, der für die Einarbeitung in einen Polymercompound das Wasser entzogen werden muss, entsteht durch den Wasserentzug kein nanoskopisch strukturiertes pulverförmiges Humat, sondern es findet bei nicht optimierter Verfahrensweise ein Aufkonzentrationsprozess statt, der dazu führt, dass die Humatteilchen bei Unterschreitung der kritischen Wassermenge ionische Wechselwirkungen ausbilden und als Agglomerat bzw. Flockulat ausfallen, welches im eigentlichen Compoundierprozess nicht mehr entsprechend fein zu dispergieren ist.

Aber auch die Lagerung von geeigneten Huminstoffen, die stets auch hydrophile Bereiche aufweisen, wodurch Feuchtigkeit in den Zwickelvolumina der Partikel kondensieren und zur Ausbildung ionischer Kräfte zwischen den Partikeln führen kann, kann zur Folge haben, dass die Huminstoffe durch feuchteinduzierte Agglomeration/Flockulation ein ungünstiges Alterungsverhalten zeigen und in Anwendungen, für die die Partikelgröße kritisch ist, nicht mehr eingesetzt werden können.

Ferner können durch die Verhältnisse im Compoundierextruder in den Knet- und Mischzonen der Schnecke, insbesondere in den Bereichen mit rückfördernden Elementen, ungünstige Druckverhältnisse entstehen, die zwei oder mehr Partikel derart zu einem Aggregat/Flockulat zusammenpressen, dass sie aufgrund der dann wirksamen ionischen Kräfte nicht wieder redispergiert werden können. Ein solches Reagglomerationsverhalten tritt auch an Blasfilmanlagen auf, da in der Schmelze vor der Düse höhere Drücke und Verweilzeiten herrschen und Huminstoffe dadurch direkt agglomerieren können oder sich an den Metallwänden absetzen, dort agglomerieren und als Agglomerate wieder abgetragen werden können, was sich jeweils durch gelegentliche Blasfilmrisse beziehungsweise durch starke Inhomogenitäten im Blasfilm bemerkbar macht.

Es fehlt im Stand der Technik somit weiterhin an einem Weg, welcher die Einarbeitung von Huminstoffen in Kunststoffe flexibel und einfach möglich macht.

Weiterhin besteht das Bedürfnis, einen ökologisch, aber auch ökonomisch günstigen Ersatz für Füllstoffe handelsüblicher Agrarfolien zu finden.

Darüber hinaus besteht weiterhin ein Bedürfnis, ein biologisch abbaubares Kunststoffsystem zur Verfügung zu haben, welches während des biologischen Abbaus die Bodenqualität nicht verschlechtert, sondern sich zumindest neutral verhält, vorzugsweise die Bodenqualität sogar verbessert.

Eine Aufgabe der vorliegenden Erfindung ist somit darin zu sehen, die zuvor genannten, mit dem Stand der Technik verbundenen Nachteile zu vermeiden, zumindest jedoch abzuschwächen.

Insbesondere ist eine Aufgabe der vorliegenden Erfindung darin zu sehen, ein System bereitzustellen, welches es ermöglicht, bodenverbessernde Füllstoffe in Polymermischungen einzuarbeiten.

Eine weitere Aufgabe der vorliegenden Erfindung ist darin zu sehen, eine Polymermischung bereitzustellen, welche biologisch abbaubar ist, nach Möglichkeit bodenverbessernde Eigenschaften aufweist und welche sich maschinell gut applizieren und zu Kunststoffprodukten, vorzugsweise Blasfolien, verarbeiten lässt.

Die zuvor gestaltete Aufgabe wird durch ein biologisch abbaubares Compound nach Anspruch 1 gelöst, weitere, vorteilhafte Ausgestaltungen dieses Erfindungsaspekts sind Gegenstand der diesbezüglichen Unteransprüche.

Weiterer Gegenstand der vorliegenden Erfindung gemäß einem zweiten Aspekt der vorliegenden Erfindung ist die Verwendung eines biologisch abbaubaren Compounds nach Anspruch 17.

Weiterer Aspekt der vorliegenden Erfindung ist ein modifizierter Huminstoffpartikel.

Weiterer Aspekt der vorliegenden Erfindung ist die Verwendung eines modifizierten Huminstoffpartikels.

Weiterer Aspekt der vorliegenden Erfindung ist ein Verfahren zur Herstellung eines modifizierten Huminstoffpartikels.

Schließlich ist weiterer Aspekt der vorliegenden Erfindung ein weiteres Verfahren zur Herstellung eines modifizierten Huminstoffpartikels.

Es versteht sich von selbst, dass Besonderheiten, Merkmale, Ausgestaltungen und Ausführungsformen sowie Vorteile oder dergleichen, welche nachfolgend - zu Zwecken der Vermeidung von unnötigen Wiederholungen - nur zu einem Erfindungsaspekt ausgeführt werden, selbstverständlich in Bezug auf die übrigen Erfindungsaspekte entsprechend gelten, ohne dass dies einer ausdrücklichen Erwähnung bedarf.

Zudem gilt, dass alle im Folgenden genannten Werte- bzw. Parameterangaben oder dergleichen grundsätzlich mit genormten bzw. standardisierten oder explizit angegebenen Bestimmungsverfahren oder aber mit dem Fachmann auf diesem Gebiet an sich geläufigen Bestimmungsmethoden ermittelt bzw. bestimmt werden können.

Darüber hinaus versteht es sich von selbst, dass alle gewichts- oder mengenbezogenen Prozentangaben vom Fachmann derart ausgewählt werden, dass in der Summe 100 % resultieren.

Dies vorausgeschickt, wird im Folgenden die vorliegende Erfindung näher beschrieben.

Gegenstand der vorliegenden Erfindung - gemäß einem **ersten** Aspekt der vorliegenden Erfindung - ist ein biologisch abbaubares Compound, aufweisend
(i) mindestens ein biologisch abbaubares Polymer in Mengen von 50 bis 95 Gew.-%,
   und
(ii) modifizierte, insbesondere stabilisierte, Huminstoffpartikel, in Mengen von 2 bis 40 Gew.-%, jeweils bezogen auf das biologisch abbaubare Compound,
wobei die Oberfläche des Huminstoffpartikels durch mindestens eine grenzflächenaktive und/oder grenzflächenreaktive Verbindung modifiziert ist.

Unter einer Modifizierung der Oberfläche ist im Rahmen der vorliegenden Erfindung insbesondere zu verstehen, dass der Huminstoffpartikel mit der grenzflächenaktiven und/oder grenzflächenreaktiven Verbindung versetzt ist und die Oberflächeneigenschaften der Huminstoffpartikel durch physikalische oder chemische Wechselwirkung zwischen Huminstoffpartikel und grenzflächenaktiver und/oder grenzflächenreaktiver Verbindung gegenüber reinen Huminstoffpartikeln verändert sind.

Denn, wie die Anmelderin überraschenderweise herausgefunden hat, lässt sich durch die Verwendung grenzflächenaktiver bzw. grenzflächenreaktiver Verbindungen die Partikelgrößen von Huminstoffpartikeln gezielt und dauerhaft einstellen und kann insbesondere eine Agglomeration der Huminstoffpartikel verhindert werden. Dies hat insbesondere zur Folge, dass der erfindungsgemäße stabilisierte Huminstoffpartikel Polymeren, insbesondere Polymerblends, in hohen Mengenanteilen zugegeben werden kann und dass die erhaltenen Compounds trotzdem zu fehlerfreien Blasfolien, welche maschinell applizierbar sind, verarbeitet werden können. Eine Agglomeration der Huminstoffpartikel wird selbst in Compoundier- oder Extrusionsprozessen verhindert. Durch die Verwendung grenzflächenaktiver und/oder grenzflächenreaktiver Verbindungen wird darüber hinaus verhindert, dass Huminstoffe nach Mahlvorgängen altern.

Durch die Verwendung von oberflächenaktiven bzw. oberflächenreaktiven Verbindungen wird insbesondere auch der Radikalcharakter der Huminstoffe an der Oberfläche der Huminstoffpartikel unterdrückt, d.h. es kommt zu weniger Reaktionen der Huminstoffe mit einer Polymermatrix, in welche die Huminstoffpartikel eingearbeitet sind. Die Oberflächeneigenschaften der modifizierten Huminstoffpartikel werden dabei durch die oberflächenaktive bzw. oberflächenreaktive Verbindung bestimmt. Auf diese Weise wird eine Standardisierung der Huminstoffpartikel erreicht, welche üblicherweise aufgrund ihres Entstehungsprozesses stets unterschiedliche chemische Zusammensetzungen und Eigenschaften aufweisen, was die Einarbeitung in Kunststoffe erleichtert bzw. im industriellen Maßstab überhaupt erst ermöglicht.

Darüber hinaus wird durch die Verwendung der oberflächenaktiven bzw. oberflächenreaktiven Verbindungen, die Kompatibilität zwischen den Huminstoffen und dem Polymerblend, in welchen diese eingearbeitet werden, deutlich verbessert - bis hin zu kovalenten Bindungen -, was sich beispielsweise in einer besseres Folienqualität und länger haltbaren Folien bzw. Formkörpern niederschlägt.

Der erfindungsgemäß eingesetzte Huminstoffpartikel soll insbesondere den Nutzen von Füllstoffen für den Boden zu optimieren. Der Füllstoff wird im Fall des modifizierten Huminstoffpartkels somit zu einem funktionellen Füllstoff, der über die Preisoptimierung oder die Einstellung mechanischer Eigenschaften hinausgehende Funktionen erfüllt. Durch den erfindungsgemäß modifizierten Huminstoffpartikel können ungünstige Füllstoffe bzw. dem Boden keinen weiteren Nutzen zufügende Füllstoffe, die bei Abbau der biologisch abbaubaren Kunststoffe freigesetzt werden, durch Stoffe zu ersetzt werden, die im Laufe des Abbauprozesses durch sukzessive Anreicherung geeignet sind, die Bodenbeschaffenheit sofort oder in aufeinander folgenden Vegetationsperioden zu verbessern.

Dies ist möglich, da durch den erfindungsgemäß modifizierten Huminstoffpartikel die Wahl der Füllstoffe nicht allein auf anorganische Materialien beschränkt ist, sondern die Tatsache genutzt wird, dass es ein natürliches organisches Stoffangebot gibt, das im Prinzip in unbegrenzten Mengen zur Verfügung steht, nämlich die Klasse der Huminstoffe.

Unter Huminstoffen sind im Rahmen der vorliegenden Erfindung aus pflanzlichem oder in Teilen auch tierischem Material bestehende Abbauprodukte der Flora und Fauna zu verstehen.

Diese aus pflanzlichen und in Teilen tierischer Materie bestehenden Abbauprodukte der Flora und in Teilen der Fauna erfüllen wichtige bodenphysiologische Aufgaben: So haben sie eine hohe Kationen-Austauscherkapazität, eine hohe Wasserbindefähigkeit, sie unterstützen die Aufnahme der Mikronährstoffe durch Pflanzen und haben eine noch ungeklärte hormonähnliche Wirkung und stellen Pflanzen durch die Chelatisierung der Bestandteile des mineralischen Bodens metallische Spurenstoffe zur Verfügung. Aufgrund ihrer Genese enthalten sie auch Stickstoff, Phosphor und Schwefel, d.h. essenzielle nichtmetallische pflanzliche Spurenelemente.

Diese vorteilhaften Eigenschaften ergeben sich daraus, dass Huminkomponenten de facto über vielfältigste verschiedenartige Funktionalitäten verfügen. In diesem Zusammenhang haben Tonmineral-Huminstoffsysteme eine besondere Bedeutung, weil Mikroorganismen und Bodenlebewesen, aber auch höhere Spezies, Tonmineralien physikalisch-chemisch aktivieren und dadurch beispielsweise deren katalytische Reaktivität gegenüber den ansonsten chemisch gehemmten Substraten, bei welchen es sich um postmortale Substanzen handelt, auf Humine erweitern.

Huminstoffe lassen sich in die drei Kategorien einteilen:
- Humine: = unlösliche und nicht eindeutig charakterisierbare Makropolymere;
- Huminsäuren: = wasserunlösliche, aber alkalilösliche humine Fragmente; und
- Fulvinsäuren: = aufgrund geringerer molarer Masse und hohem Anteil an Phenol- und Carboxylgruppen auch im Sauren lösliche humine Fragmente.

Ihrer Natur nach sind Huminstrukturen als abgestorbene Bestandteile einer ehemals lebenden Materie zu betrachten, wobei nicht nur pflanzliche Quellen, sondern auch tierische Quellen einen Beitrag leisten können. Entsprechend beinhalten sie auch selbst nach biogenen Defragmentierungsreaktionen all die Bestandteile, die vorher auch in vivo vorhanden waren. Dazu gehören Proteine, wie zum Beispiel Keratine, Kollagene oder Fibroine, aber auch Polysaccharidstrukturen, (degradierte) Lignine, Terpene und wasserspeichernde, wie auch hydrophobe Salze, die aber, im Gegensatz zu der ursprünglichen lebenden Materie, nicht mehr zu Formen der Selbstorganisation oder -reproduktion oder -reparatur fähig sind. Die Entstehung der Huminstoffe läuft nach heutigem Verständnis über vier Phasen:

### Stadium 1: Metabolisches Stadium

Umwandlung postmortaler Substanzen durch Stoffwechselprozesse von Organismen in reaktive Substanzen, welche zur biochemisch induzierten Bildung von Huminstoffen führen.

### Stadium 2: Beginn der einsetzenden, aber nicht mehr endenden Radikalbildung

Huminen ist die außergewöhnliche Stoffeigenschaft zu eigen, einen permanenten Vorrat an Radikalen zu generieren. Dies geschieht vorwiegend durch die aus der metabolischen Phase vorgelegten Lignin- und mehrwertigen Polyphenol-Fragmente, die beispielsweise durch die im Boden fast allgegenwärtig vorhandenen Fe(III)-Ionen elektrophil angreifbar sind und auf diese Weise leicht Radikale bilden.

### Stadium 3: Konformationsphase

Die außerordentliche Reaktivität von Radikalen gestattet auch, die im Boden vorliegenden reaktionsträgen Stoffe in die Huminstoffsynthese durch Inkorporation (noch) nicht huminer Materialien einzubinden.

### Stadium 4: Konsolidierung

In diesem Stadium werden die typischen und nicht reproduzierbaren Huminstoffsysteme gebildet. Hier zeigt sich, dass sich aufgrund der permanenten Präsenz von Radikalen ein Effekt der Gleichzeitigkeit aller Huminstoffreaktionen einstellt und eine Vorausschau der Reaktionsrichtung und Endprodukte nicht möglich ist. Auf diese Weise sorgen natürliche biochemische Reaktionsmechanismen dafür, dass ein großer Teil der hochstrukturierten Naturstoffe nicht zu einfachen Kohlendioxid- und Wassermolekülen abgebaut und somit mineralisiert wird. Ob und welche der vielen möglichen Reaktionswege eingeschlagen werden, hängt von den jeweils momentanen örtlichen und bis in mikroskopische Bereiche vorherrschenden Reaktionsbedingungen ab: UV-Strahlung, Temperatur, Wassergehalt, pH-Wert, Redoxpotentiale, die Konzentration atmosphärischer Gase, die Konzentration von Wasserstoffperoxid, postmortale Substanzen und oberflächenaktive Stoffe, wie beispielsweise Tonmineralien, führen die Reaktionen katalytisch in unvorhersehbare und nur statistisch erfassbare Richtungen. Ebenso können postmortale Substanzen, ohne an chemische Humifizierungsreaktionen beteiligt zu sein, von Huminstoffen physikalisch durch Cavitation eingeschlossen werden und diese Cavitanten wiederum in die Biosynthese der Huminstoffe einbezogen werden.

In einem symbiotischen Schritt können Lebewesen wie Regen- und Borstenwürmer die biologische Aktivität solcher Huminstoffe durch Zuführung von Tonmineralien erheblich steigern, indem sie helfen Tonmineral-Humin-Systeme bzw. Ton-Humus-Komplexe - nach Harms/Schröder auch Regenwurmmull genannt (s. Dietrich Schroeder, Bodenkunde in Stichworten 4. Rev. und erw. Auflage, Verlag F. Hirt (1983), Unterägen (CH); Walter Harms, Huminstoffkontinuen - eine unbestimmbare Matrix, Dissertation Oldenburg, 2005) - zu bilden, welche eine zusätzliche Huminstoffbildung autokatalytisch aktivieren, während biochemische Reaktionen mit postmortalen Substanzen üblicherweise gehemmt sind. In den Mikroräumen der Tonminerale werden diese Substanzen und die im Anfangsstadium gebildeten noch niedermolekularen kleinvolumigen Huminstoffe in einem Maße angebunden, dass sie zwischen den Tonmineralschichten irreversibel eingeschlossen sind, solange diese nicht unmittelbar der Witterung ausgesetzt werden.

In Verbindung mit dem Stadium 2 der Huminstoffbildung steht die Fähigkeit der sich bildenden Huminstoffe, lipophile biogene Strukturen oder Stoffgruppen aufnehmen zu können, da Humine, wie mittels Elektronenspin-resonanz-Messungen (ESR) nachweisbar, permanent Radikale erzeugen und daher auch reaktionsträge biologische Stoffe wie z.B. isoprenoide Stoffe unabhängig von UV- bzw. lichtinduzierten photochemischen Reaktionsmechanismen abbauen und sich einverleiben können.

Die Huminstoffe stellen somit keine exakt definierte Substanzklasse dar, sondern jeder Huminstoff spiegelt die ortstypische Vegetation hinsichtlich Flora und Fauna - und diese wird durch die klimatischen Verhältnisse und die Wasserverfügbarkeit definiert - sowie, im Falle der aus der Natur gewonnenen und veredelten Huminstoffen, den Gewinnungs- und Aufreinigungsprozess wider. Somit definiert der Ursprung der Huminstoffe seine Zusammensetzung und seine Eigenschaften. Anhand der Fraktionierung der Huminstoffe nach pH-Löslichkeit, wie zuvor ausgeführt, ist es aber möglich, das Eigenschaftsbild von Huminstoffen in Teilen zu vereinheitlichen.

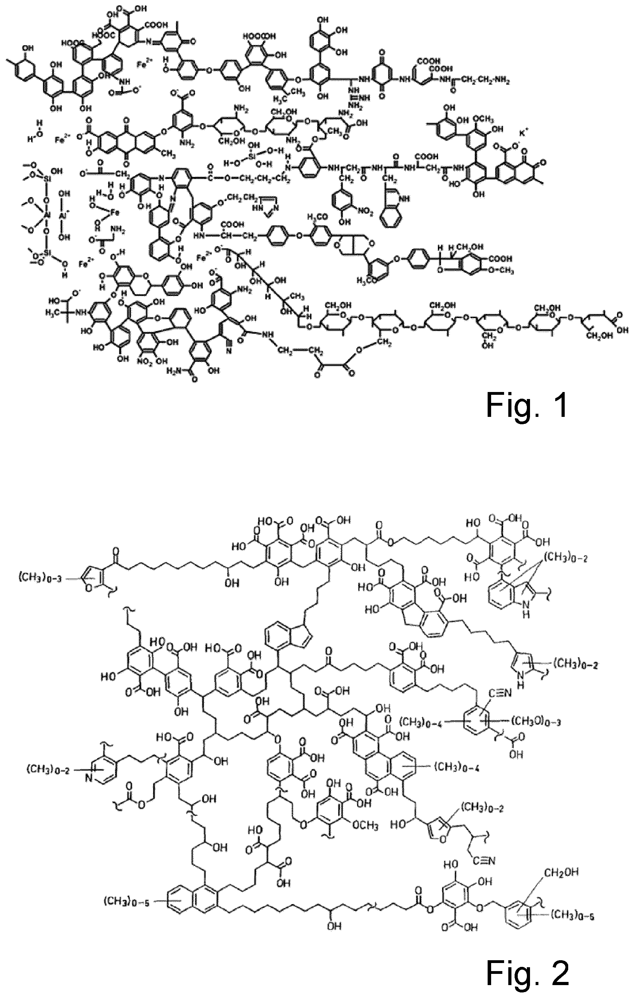

Beispielhafte Strukturen - ohne Anspruch auf vollständige wissenschaftliche Exaktheit - sind den Figuren 1 und 2 zu entnehmen.

Es zeigen die Figurendarstellung gemäß
- Fig. 1:: einen Strukturvorschlag für einen Bodenhuminstoff aus O.V. Brovarova, D.V. Kuzmin, "Physico-chemical properties and biological activity of humates isolated from coal sludge", Izvestia Orenburg State Agrarian University. 2021, 92 (6) 14 - 19 nach D. Kleinhempel, "Ein Beitrag zur Theorie des Huminstoffzustandes", Albrecht Thaer Archiv 1970, 14, 3; und
- Fig. 2:: einen weiterem Strukturvorschlag für einen Bodenhuminstoff nach F. De Souza, S. R. Braganca, "Extraction and characterisation of humic acid from coal for the application as dispersant of ceramic powders", J Mater Res Technol. 2018, 7 (3) 254-260; https://doi.org/10.1016/j.jmrt.2017.08.008

Aus den Figurendarstellungen wird deutlich, dass phenolische und aromatische Carboxylat- bzw. Carbonsäure-Struktureinheiten einen Teil des Huminstoffgerüstes definieren und somit in Abhängigkeit der Genese, insbesondere des herrschenden pH-Werts, bzw. der Aufbereitung polyionische oligomere oder makromere Strukturen vorliegen, wobei die Oberflächenenergie des Huminstoffpartikels nicht a priori eine homogene Stoffeigenschaft auf molekularem Level ist.

Aus den vorgenannten Erläuterungen zur Entstehung und Klassifizierung der Huminstoffe wird ersichtlich, dass der Einsatz von Huminstoffen eine besondere Beachtung der Einarbeitung in Kunststoffe erfordert, da fertig formulierte Kunststoffe nur dann ihr Eigenschaftsprofil zur Anwendung bringen können, wenn die einzelnen Bestandteile des Kunststoffes sich integrativ in dem Compound verhalten, d.h. kompatibel sind. Bei Füllstoffen und auch Additiven muss daher darauf geachtet werden, dass die gewünschten Eigenschaften der polymeren Matrix durch die Füllstoffe oder Additive nicht gemindert werden. Durch den erfindungsgemäßen modifizierten Huminstoffpartikel ist es möglich, Huminstoffe in eine Polymermatrix einzubringen, ohne die Eigenschaften der Polymere nachteilig zu beeinflussen.

Zusammenfassend ist festzustellen, dass der erfindungsgemäß modifizierte Huminstoffpartikel erstmals die Herstellung eines Compounds, insbesondere für Folienvarianten erlaubt, das mit Hilfe eines biologisch abbaubaren bzw. biogenen Matrixpolymers zur Bodenverbesserung beitragen kann, indem es bei Bedarf während des Abbauprozesses gezielt Mangelerscheinungen wie das Fehlen wichtiger Spurenelemente ausgleichen oder als Düngemittel geeignete Komponenten einbringen kann. Zusätzlich lässt sich der Abbauprozess je nach Anteil der drei Huminvarianten steuern, wobei der Einsatz von Fulvinsäuren naturgemäß chemische Abbaumechanismen stärker beschleunigt als Huminsäuren und diese wiederum schneller als Humine. Im Allgemeinen ist es ohnehin schon aus Kostengründen zweckmäßig, Huminstoffe in ihrer natürlichen Zusammensetzung zu nutzen, sofern ihre spezifische Charakteristik bekannt ist.

Die Begriffe "Pflanzen-Biostimulanz" und "Bodenverbesserer" bzw. "Bodenverbesserungsmittel" werden im Rahmen dieser Erfindung gemäß der Definition der Produktfunktionskategorien aus dem Amtsblatt der Europäischen Union, Verordnung 2019/1009 vom 05. Juni 2019, Vorschriften für die Bereitstellung von EU-Düngeprodukten, Anhang 1 verwendet, insbesondere gemäß den Produktfunktionskategorien (PFC - Product Function Categories) von EU-Düngeprodukten Teil 1, Bezeichnung der PFC, Teil 2, Anforderungen für PFC:
PFC 1: Düngemittel
Ein Düngemittel ist ein EU-Düngeprodukt, dessen Funktion es ist, Pflanzen oder Pilze mit Nährstoffen zu versorgen.

### PFC 3: Bodenverbesserungsmittel

Ein Bodenverbesserungsmittel ist ein EU-Düngeprodukt, dessen Funktion es ist, die physikalischen oder chemischen Eigenschaften, die Struktur oder die biologische Aktivität des Bodens, in den es eingebracht wird, zu erhalten, zu verbessern oder zu schützen. Ein organisches Bodenverbesserungsmittel darf Torf, Leonardit und Lignit enthalten, jedoch kein anderes Material, das fossiliert oder in geologische Formationen eingebettet ist.

### PFC 6: Pflanzen-Biostimulans

Ein Pflanzen-Biostimulans ist ein EU-Düngeprodukt, das dazu dient, pflanzliche Ernährungsprozesse unabhängig vom Nährstoffgehalt des Produkts zu stimulieren, wobei ausschließlich auf die Verbesserung eines oder mehrerer der folgenden Merkmale der Pflanze oder der Rhizosphäre der Pflanze abgezielt wird:
a) Effizienz der Nährstoffverwertung
b) Toleranz gegenüber abiotischem Stress
c) Qualitätsmerkmale oder
d) Verfügbarkeit von im Boden oder in der Rhizosphäre enthaltenen Nährstoffen.

Unter einer grenzflächenaktiven Substanz ist im Rahmen der vorliegenden Erfindung insbesondere eine Substanz zu verstehen, welche die Grenzflächeneigenschaften eines Stoffes oder einer Phase verändern kann und somit die Mischbarkeit mit oder der Dispergierbarkeit in anderen Phasen erhöht oder verschlechtert.

Unter einer grenzflächenreaktiven Substanz ist insbesondere eine Verbindung zu verstehen, welche an der Grenzfläche einer Phase mit einer Verbindung einer Phase chemisch reagiert und so die Grenzflächeneigenschaften der Phase ändert.

Was nun die grenzflächenaktive und/oder grenzflächenreaktive Verbindung anbelangt, so kann diese aus einer Vielzahl von Verbindungen ausgewählt sein. Im Rahmen der vorliegenden Erfindung hat es sich jedoch bewährt, wenn die grenzflächenaktive und/oder grenzflächenreaktive Verbindung ausgewählt ist aus der Gruppe bestehend aus Netz- oder Dispergiermitteln, Ligninderivaten, insbesondere Lignosulfonaten, Polyuroniden, Epoxyverbindungen und deren Mischungen. Vorzugsweise ist die grenzflächenaktive und/oder grenzflächenreaktive Verbindung ausgewählt aus der Gruppe bestehend aus Netz- oder Dispergiermitteln, Lignosulfonaten, Epoxyverbindungen und deren Mischungen.

Mit den vorstehenden Verbindungen lassen sich Huminstoffpartikel mit Partikelgrößen im Mikrometerbereich effektiv und dauerhaft stabilisieren.

In diesem Zusammenhang hat es sich insbesondere bewährt, wenn das Netz- oder Dispergiermittel ausgewählt ist aus der Gruppe bestehend aus organomodifizierten (Poly-)Siloxanen, Polyethern, Polyestern, Polyetherestern, Polycarboxylaten, Polyamiden, Polyurethanen, Fettsäurecopolymeren, modifizierten natürlichen Ölen, Tensiden und deren Mischungen.

Ganz besonders gute Ergebnisse werden erhalten, wenn das Netz- oder Dispergiermittel ausgewählt ist aus der Gruppe bestehend aus funktionalisierten organomodifizierten (Poly-)Siloxanen, funktionalisierten Polyethern, funktionalisierten Polyestern, funktionalisierten Polyetherstern, funktionalisierten Polycarboxylaten, funktionalisierten Polyamiden, funktionalisierten Polyurethanen, funktionalisierten Fettsäurecopolymeren, funktionalisierten modifizierten natürlichen Ölen und deren Mischungen.

Das Netz- oder Dispergiermittel kann dabei insbesondere sauer und/oder basisch funktionalisiert sein. Vorzugsweise enthält ein vorgenanntes funktionalisiertes Polymer mindestens eine funktionelle Gruppe, welche insbesondere ausgewählt sein kann aus der Gruppe von Hydroxyl-(-OH), Thiol- (-SH), Amin-, Ammonium-, Carboxyl-, Carbonyl-, Ester-, Ether-, Sulfonyl-, Phosphonsäure, Phosphorsäure- und/oder Phosphorsäureester-Funktionen, vorzugsweise Hydroxyl- (-OH), Thiol- (-SH) und/oder Amin-Funktionen.

Besonders gute Ergebnisse werden im Rahmen der vorliegenden Erfindung erhalten, wenn das Netz- oder Dispergiermittel ausgewählt ist aus der Gruppe bestehend aus funktionalisierten organomodifizierten (Poly-)Siloxanen, funktionalisierten Polyethern, funktionalisierten Polyestern, funktionalisierten Polyetherstern, funktionalisierten Polycarboxylaten, funktionalisierten Polyamiden und deren Mischungen.

Im Rahmen der vorliegenden Erfindung ist es weiterhin üblicherweise vorgesehen, dass die Epoxyverbindung mindestens eine endständige Epoxygruppe aufweist. Im Rahmen der vorliegenden Erfindung werden somit vorzugsweise Verbindungen mit 1,2-Epoxygruppen verwendet.

Darüber hinaus ist es im Rahmen der vorliegenden Erfindung üblicherweise vorgesehen, dass die Epoxyverbindung ausgewählt ist aus der Gruppe von epoxyfunktionalierten Alkanen, epoxyfunktionalierten Ethern, epoxyfunktionalisierten Polyetherestern, epoxidierten pflanzlichen Fettsäuren und deren Mischungen.

Huminstoffe sind Polyphenole und weisen selbst in neutralisierter Form noch reaktive Hydroxyl-Funktionalitäten auf. Diese können mit Epoxiden veredelt werden.

Insbesondere mit Glycidylethern, aber auch mit epoxidierten pflanzlichen Fettsäuren lassen sich die Grenzflächeneigenschaften der Huminstoffpartikel positiv verändern und eine bessere Kompatibilität zur Polymermatrix erreichen.

Bevorzugt werden biobasierte Pflanzenölepoxide, wie epoxidierte Lein- und Sojafettsäuren, epoxyfunktionalisierte Alkane, wie zum Beispiel IPOX RD 17, oder epoxyfunktionalisierte Ether, wie beispielsweise IPOX CL 12, eingesetzt, wobei biobasierte oder teilbiobasierte Epoxide bevorzugt sind.

Im Rahmen der vorliegenden Erfindung wird es weiterhin bevorzugt, wenn die Epoxyverbindung ausgewählt ist aus der Gruppe bestehend aus Glycidylethern, insbesondere 2-Ethyl-Hexylglycidylether, Glycerinpolylgycidylether, epoxidierten Leinölfettsäuren, epoxidierten Sojaölfettsäuren, epoxidierten Sonnenblumenölfettsäuren, epoxidierten Rapsölfettsäuren und deren Mischungen. Hierbei wird es bevorzugt, wenn die Epoxyverbindung ausgewählt ist aus der Gruppe bestehend aus Glycidylethern, insbesondere 2-Ethyl-Hexylglycidylether, Glycerinpolylgycidylether, epoxidierten Leinölfettsäuren, epoxidierten Sojaölfettsäuren und deren Mischungen. Besonders gute Ergebnisse werden erhalten, wenn die Epoxyverbindung ausgewählt ist aus der Gruppe bestehend aus 2-Ethyl-Hexylglycidylether, Glycerinpolylgycidylether und deren Mischungen.

Was nun die Menge anbelangt, in welcher der stabilisierte Huminstoffpartikel die grenzflächenaktive und/oder grenzflächenreaktive Verbindung enthält, so kann diese in weiten Bereichen variieren. Es hat sich jedoch bewährt, wenn der stabilisierte Huminstoffpartikel die grenzflächenaktive und/oder grenzflächenreaktive Verbindung in Mengen von 1 bis 50 Gew.-%, insbesondere 2 bis 30 Gew.-%, vorzugsweise 3 bis 25 Gew.-%, bevorzugt 4 bis 20 Gew.-%, besonders bevorzugt 5 bis 15 Gew.-%, bezogen auf den stabilisierten Huminstoffpartikel, aufweist.

Mit den vorgenannten Gehalten an grenzflächenaktiver und/oder grenzflächenreaktiver Verbindung in den stabilisierten Huminstoffpartikeln lassen sich Huminstoffpartikel mit Partikelgrößen im niedrigen Mikrometer- oder sogar Submikrometerbereich stabilisieren, wobei eine Reagglomeration der Partikel verhindert werden kann. Auch wird die Kompatibilität mit Polymermischungen bzw. Polymerblends deutlich verbessert und einer Alterung der Huminstoffe, insbesondere im Anschluss an Mahlvorgänge, wirksam begegnet.

Im Allgemeinen ist es weiterhin vorgesehen, dass der stabilisierte Huminstoffpartikel mindestens ein Huminstoff ausgewählt aus der Gruppe von Fulvinsäuren, Huminsäuren, Huminen und deren Mischungen und Salzen enthält. Die genannte Aufzählung beinhaltet insbesondere auch Salze von Huminstoffen, insbesondere der Fulvinsäuren, sogenannte Fulvate, und der Huminsäuren, sogenannte Humate.

Im Rahmen der vorliegenden Erfindung ist es üblicherweise vorgesehen, dass der Huminstoff aus Torf, Lignit, Leonardit oder aus oberflächennahen verwitterten Produkten von Inkohlungsprozessen, wie beispielsweise Caustobiolithen und Phytocaustobiolithen, mittels geeigneter Aufbereitungsprozesse gewonnen werden kann.

Besonders bevorzugt ist der Huminstoff ausgewählt aus der Gruppe von Fulvinsäuren, Huminsäuren und deren Mischungen und Salzen.

Die Verbesserung des Eigenschaftsprofils biologisch abbaubarer Kunststoffe für Anwendungen im Agrar- und Gartenbausektor durch Inkorporation von Huminstoffen in biologisch abbaubare Matrixpolymere kann nur dann den beabsichtigten Mehrwert für den Boden erzielen, wenn die eingesetzten Kunststoffe in ihrer jeweiligen Applikation in endlichen Zeiträumen abgebaut werden. Das heißt, der Abbau sollte entweder zumindest die Huminstoffe so schnell freisetzen, wie Huminstoffe durch Bodenerosion verbraucht werden, oder innerhalb der Kulturzeit der Pflanze stattfinden. Da der biologische Abbau von Polymeren letztlich nur enzymatisch an vorzerlegten Polymeren stattfinden kann, ist es insbesondere bei dickwandigeren Produktformen notwendig, dem Mikrobiom schneller verstoffwechselbare Fragmente zur Verfügung zu stellen. Dies kann vorzugsweise durch den Einsatz von Fulvinsäuren geschehen, insbesondere kann durch die Verwendung von Fulvinsäuren und Humaten, die chemisch gesehen auf den gleichen Baugruppen beruhen, ein Puffersystem - eine Mischung einer schwachen Säure mit ihren Salzen - eingebracht werden, dass bei Anwesenheit von Feuchte im Polymerfilm eine beschleunigte Hydrolyse katalysiert. Ferner können durch die geeignete Auswahl weiterer anorganischer Salze und Inkorporation in die polymere Matrix, die Bedingungen des biologischen Abbaus durch Stärkung des Bodenmikrobioms stark beschleunigt werden.

Darüber hinaus ist es gemäß einer bevorzugten Ausführungsform weiterhin vorgesehen, dass eine bevorzugte Huminzusammensetzung wasserlösliche Fulvinsäuren in Mengen von 5 bis 50 Gew.-%, wasserunlösliche alkalilösliche Huminsäuren in Mengen von 5 bis 80 Gew.-% und wasser- und alkaliunlösliche Humine in Mengen zwischen 5 und 90 Gew.-%, jeweils bezogen auf die Gesamtheit der eingesetzten Huminstoffe, enthält.

Üblicherweise ist es im Rahmen der vorliegenden Erfindung vorgesehen, dass der modifizierte Huminstoffpartikel den Huminstoff in Mengen von 40 bis 99 Gew.-%, insbesondere 50 bis 98 Gew.-%, vorzugsweise 60 bis 97 Gew.-%, bevorzugt 70 bis 96 Gew.-%, besonders bevorzugt 80 bis 95 Gew.-%, bezogen auf den stabilisierten Huminstoffpartikel, aufweist.

Gemäß einer bevorzugten Ausführungsform der vorliegenden Erfindung ist es somit vorgesehen, dass der modifizierte Huminstoffpartikel
(a) mindestens einen Huminstoff in Mengen von 40 bis 99 Gew.-% und
(b) mindestens eine grenzflächenaktive und/oder grenzflächenreaktive Verbindung in Mengen von 1 bis 50 Gew.-%, jeweils bezogen auf den stabilisierten Huminstoffpartikel,
aufweist.

Für diese besondere Ausführungsform der vorliegenden Erfindung gelten sämtliche Vorteile, Merkmale und Besonderheiten, welche zuvor im Zusammenhang mit anderen Ausführungsformen genannt wurden, entsprechend.

Darüber hinaus kann es im Rahmen der vorliegenden Erfindung vorgesehen sein, dass der stabilisierte Huminstoffpartikel mindestens ein Additiv aufweist. Im Rahmen der vorliegenden Erfindung ist es insbesondere möglich, dass der Huminstoffpartikel mindestens ein bodenverbesserndes Additiv aufweist.

In diesem Zusammenhang ist es dabei vorzugsweise vorgesehen, dass das Additiv ausgewählt ist aus der Gruppe von Tonmineralien, anorganischen Salzen, organischen Salzen und deren Mischungen, vorzugsweise Tonmineralien, anorganischen Salzen und deren Mischungen. Durch die Einbringung von Tonmineralien, insbesondere mikronisierten Tonmineralien, können Ton-Huminstoffkomplexe gebildet werden, welche sich in hervorragender Weise zur Bodenverbesserung eignen. Durch die Verwendung von anorganischen und/oder organischen Salzen, insbesondere anorganischen Salzen, ist es möglich, den Huminstoffpartikel mit Spurenelementen anzureichern, welche für das Pflanzenwachstum oder zur Verbesserung des Bodenlebens benötigt werden.

Besonders bevorzugt sind die Spurenelemente ausgewählt aus Elementen der ersten bis siebten Hauptgruppe, insbesondere Natrium, Kalium, Magnesium, Calcium, Bor, Selen, Iod und deren Mischungen, der ersten und zweiten Nebengruppe, insbesondere Kupfer, Zink und deren Mischungen, der fünften bis achten Nebengruppe, insbesondere Vanadium, Chrom, Molybdän, Eisen, Mangan, Kobalt und deren Mischungen. Die Spurenelemente können vorzugsweise über organische und/oder anorganische Salze, vorzugsweise anorganische Salze, insbesondere in Form basischer Metallsalze, vorzugsweise in Form von Hydroxiden, oder in Form komplexer Anionen in die Huminstoffpartikel eingebracht werden. Die Verwendung basischer Metallsalze, insbesondere von Hydroxiden hat den Vorteil, dass sich Humate oder Fulvate bilden.

Insbesondere Humate, Fulvate oder Lignosulfonate - letztere können auch als Netz- oder Dispergiermittel eingesetzt werden - können in Teilen mit essenziellen metallischen Spurenelementen beladen werden, welche die Biostimulanz und die Düngewirkung der Huminstoffpartikel verbessern.

In einer zusätzlichen Variante ist es möglich, sich die cavitierenden Eigenschaften natürlicher Ton- Humus-Konglomerate zu Nutze zu machen und diese in einer Matrix aus biologisch abbaubaren Werkstoffen mit zusätzlichen düngewirksamen Mineralien zu befrachten. Unter diesen können je nach Bedarf Phosphate, Sulfate, in speziellen Nischenanwendungen Nitrate, aber vor allem Spurenelemente gezielt eingearbeitet werden, deren Inkorporation schon aufgrund ihrer geringen Dosierung den Fertigungsprozess nicht beeinflussen.

Was nun die Menge anbelangt, in welchen der modifizierte Huminstoffpartikel das Additiv aufweist, so weist der modifizierte Huminstoffpartikel das Additiv üblicherweise in Mengen von 0,005 bis 60 Gew.-%, insbesondere 0,05 bis 50 Gew.- %, vorzugsweise 0,5 bis 40 Gew.-%, bevorzugt 5 bis 35 Gew.-%, bezogen auf den modifizierten Huminstoffpartikel, auf.

Wenn der modifizierte Huminstoffpartikel Tonmineralien als Additiv enthält, so enthält der modifizierte Huminstoffpartikel die Tonmineralien vorzugsweise in Mengen von von 5 bis 60 Gew.-%, insbesondere 10 bis 50 Gew.-%, vorzugsweise 15 bis 40 Gew.- %, bevorzugt 20 bis 35 Gew.-%, bezogen auf den modifizierten Huminstoffpartikel.

Wenn der modifizierte Huminstoffpartikel anorganische und/oder organische Salze, insbesondere anorganische Salze, als Additiv enthält, so enthält der modifizierte Huminstoffpartikel die anorganischen und/oder organischen Salze, insbesondere anorganischen Salze, in Mengen von 0,005 bis 25 Gew.-%, insbesondere 0,05 bis 20 Gew.-%, vorzugsweise 0,5 bis 15 Gew.-%, bevorzugt 1 bis 10 Gew.-%, bezogen auf den modifizierten Huminstoffpartikel.

Gemäß einer bevorzugten Ausführungsform der vorliegenden Erfindung ist es vorgesehen, dass der modifizierte Huminstoffpartikel
(a) mindestens einen Huminstoff, insbesondere in Mengen von 40 bis 99 Gew.-%,
(b) mindestens eine grenzflächenaktive und/oder grenzflächenreaktive Verbindung, insbesondere in Mengen von 1 bis 50 Gew.-%, und
(c) mindestens ein Additiv, insbesondere in Mengen von 0,005 bis 60 Gew.-%, jeweils bezogen auf den stabilisierten Huminstoffpartikel,
aufweist.

Für diese besondere und bevorzugte Ausführungsform der vorliegenden Erfindung gelten alle vorgenannten Merkmale, Besonderheiten und Vorteile in entsprechender Weise.

Im Rahmen der vorliegenden Erfindung ist es vorzugsweise auch vorgesehen, dass der modifizierte Huminstoffpartikel mikronisiert ist. Vorzugsweise liegt der modifizierte Huminstoffpartikel mit einer sehr geringen Partikelgröße vor und ist nicht agglomeriert.

Im Rahmen der vorliegenden Erfindung hat es sich bewährt, wenn der modifizierte Huminstoffpartikel eine Oberkorngrenze von 20 µm, insbesondere 10 µm, vorzugsweise 5 µm, bevorzugt 2 µm, besonders bevorzugt 1 µm, aufweist. Durch die sehr kleinen Partikelgrößen kann im Rahmen der vorliegenden Erfindung eine besonders gleichmäßige und gute Einarbeitung in Polymere, insbesondere Polymerblends, erreicht werden, sodass der erfindungsgemäße modifizierte Huminstoffpartikel auch in hohen Anteilen in Blasfolien angewendet werden kann.

Gemäß einer weiteren Ausführungsform weist der modifizierte Huminstoffpartikel eine Oberkorngrenze von 50 µm, insbesondere 30 µm, vorzugsweise 20 µm, bevorzugt 10 µm, besonders bevorzugt 5 µm, auf. Huminstoffpartikel mit diesen Partikelgrößen können beispielsweise zur Herstellung von Flachfolien, aber auch in Tiefzieh- oder Spritzgussanwendungen eingesetzt werden. Bevorzugt ist jedoch auch hier stets die kleine Oberkorngrenze, welche die Herstellung von Blasfolien ermöglicht.

Im Rahmen der vorliegenden Erfindung ist es üblicherweise vorgesehen, dass der Huminstoffpartikel keinen Überkornanteil aufweist, d.h. keine Partikel mit einer Partikelgröße, die größer ist als die Oberkorngrenze, enthält. Dies kann insbesondere durch Sieben oder anderen Klassierungen erreicht werden. Das Fehlen von Überkornanteilen ist insbesondere essentiell, um reproduzierbar hochwertige Compounds zu erhalten, welche biologisch abbaubar und mit Huminstoffen gefüllt sind. Durch die erfindungsgemäßen modifizierten Huminstoffpartikeln ist es möglich, selbst hochgefüllte Blasfolien in hervorragender Qualität herzustellen.

Unter einem Compound ist im Rahmen der vorliegenden Erfindung insbesondere ein Kunststoff zu verstehen, der neben einem Polymer oder einer Polymermischung weitere Stoffe, insbesondere Additiv, Füllstoffe und/oder Verstärkungsstoffe, enthält.

Unter einer Polymermischung ist im Rahmen der vorliegenden Erfindung insbesondere ein Polymerblend zu verstehen. Es handelt sich hierbei um rein physikalische Mischungen unterschiedlicher Polymere, zwischen denen keine neuen chemischen Bindungen entstehen.

Im Rahmen der vorliegenden Erfindung ist es üblicherweise vorgesehen, dass das biologisch abbaubare Polymer ausgewählt ist aus der Gruppe von Polyestern, Polyethern, Polyetherestern, Polycarboxylaten, Polyamiden, Polyurethanen polymeren Kohlenhydraten und deren Mischungen.

Im Rahmen der vorliegenden Erfindung ist es vorzugsweise vorgesehen, dass das Compound gemäß EN 17033 innerhalb von 24 Monaten bei 20 bis 28 °C biologisch abbaubar ist. Gleichermaßen kann es vorzugsweise vorgesehen sein, dass das Compound gemäß DIN 13432 kompostierbar ist.

Gemäß einer bevorzugten Ausführungsform der vorliegenden Erfindung ist es vorgesehen, dass das biologisch abbaubare Polymer ausgewählt ist aus der Gruppe bestehend aus Polylactid (PLA), Polybutylensuccinat (PBS), Polyhydroxyalkanoaten (PHA), aliphatisch-aromatischen (Co-)Polyestern auf Basis von Butandiol, Terephthalsäure und mindestens einer aliphatischen Dicarbonsäure, Polybutylensuccinat-co-adipat (PBSA), Polycaprolacton (PCL), polymeren Kohlenhydraten sowie deren Mischungen.

Weiterhin wird es im Rahmen der vorliegenden Erfindung bevorzugt, wenn das biologisch abbaubare Polymer ausgewählt ist aus der Gruppe bestehend aus Polylactid (PLA), Polybutylensuccinat (PBS), Polyhydroxyalkanoaten (PHA), Polycaprolacton (PCL), Polybutylenadipat-terephthalat (PBAT), Polybutylensuccinat-terephthalat (PBST), Polybutylensebacat-terephthalat (PBSeT), Polybutylensuccinat-co-adipat (PBSA), Polybutylen-isosorbid-adipat-coterephtalat (PBIAT), polymeren Kohlenhydraten und deren Mischungen.

Vorzugsweise weist das erfindungsgemäße biologisch abbaubare Compound mindestens eines der vorgenannten Polymere auf.

Im Rahmen der vorliegenden Erfindung wird es darüber hinaus bevorzugt, wenn das Compound einen Polymerblend enthält. Vorzugsweise enthält das Compound mindestens zwei, vorzugsweise genau zwei, der genannten Polymere oder besteht im Hinblick auf die Polymerkomponente hieraus.

Was nun die Menge anbelangt, in welcher die biologisch abbaubare Polymermischung das biologisch abbaubare Polymer enthält, so kann diese naturgemäß in weiten Bereichen variieren. Es hat sich jedoch bewährt, wenn das biologisch abbaubare Compound das biologisch abbaubare Polymer in Mengen von 50 bis 95 Gew.-%, insbesondere 55 bis 95 Gew.-%, vorzugsweise 60 bis 90 Gew.- %, bevorzugt 65 bis 90 Gew.-%, bezogen auf das biologisch abbaubare Compound, aufweist.

Gleichermaßen kann es im Rahmen der vorliegenden Erfindung vorgesehen sein, dass das biologisch abbaubare Compound den modifizierten Huminstoffpartikel in Mengen von 2 bis 40 Gew.-% insbesondere 3 bis 35 Gew.-%, vorzugsweise 4 bis 30 Gew.-%, bevorzugt 5 bis 25 Gew.-%, bezogen auf das biologisch abbaubare Compound, aufweist.

Wenn das Compound zur Herstellung von Folien verwendet wird, hat es sich bewährt, wenn der Compound den modifizierten Huminstoffpartikel in Mengen von 2 bis 25 Gew.-% insbesondere 3 bis 20 Gew.-%, vorzugsweise 4 bis 18 Gew.-%, bevorzugt 5 bis 15 Gew.-%, bezogen auf das biologisch abbaubare Compound, aufweist.

Gemäß einer bevorzugten Ausführungsform der vorliegenden Erfindung ist es somit vorgesehen, dass das biologisch abbaubare Compound
(i) mindestens ein biologisch abbaubares Polymer in Mengen von 50 bis 95 Gew.- % und
(ii) zuvor beschriebene modifizierte Huminstoffpartikel in Mengen von 2 bis 25 Gew.-%, jeweils bezogen auf das biologisch abbaubare Compound,
aufweist.

Für diese besondere bevorzugte Ausführungsform gelten alle vorgenannten Merkmale, Vorteile und Besonderheiten, welche im Zusammenhang mit anderen Ausführungsformen aufgezählt wurden, entsprechend.

Wenn das Compound zur Herstellung von Körpern verwendet wird, hat es sich bewährt, wenn der Compound den modifizierten Huminstoffpartikel in Mengen von 2 bis 40 Gew.-% insbesondere 5 bis 35 Gew.-%, vorzugsweise 8 bis 30 Gew.-%, bevorzugt 10 bis 25 Gew.-%, bezogen auf das biologisch abbaubare Compound, aufweist.

Gemäß einer bevorzugten Ausführungsform der vorliegenden Erfindung ist es somit vorgesehen, dass das biologisch abbaubare Compound
(i) mindestens ein biologisch abbaubares Polymer in Mengen von 50 bis 95 Gew.- % und
(ii) zuvor beschriebene modifizierte Huminstoffpartikel in Mengen von 2 bis 40 Gew.-%, jeweils bezogen auf das biologisch abbaubare Compound,
aufweist.

Für diese besondere bevorzugte Ausführungsform gelten alle vorgenannten Merkmale, Vorteile und Besonderheiten, welche im Zusammenhang mit anderen Ausführungsformen aufgezählt wurden, entsprechend.

Gemäß einer bevorzugten Ausführungsform der vorliegenden Erfindung ist es vorgesehen, dass die biologisch abbaubare Polymermischung mindestens einen Füllstoff aufweist.

Im Rahmen der vorliegenden Erfindung wird es bevorzugt, wenn der Füllstoff ausgewählt ist aus bodenverbessernden Füllstoffen, d.h. Füllstoffen, welche entweder die Beschaffenheit des Bodens oder des Mikrobioms verbessern.

Im Rahmen der vorliegenden Erfindung kann es vorgesehen sein, dass der Füllstoff ausgewählt ist aus mineralischen Füllstoffen, organischen Füllstoffen und deren Mischungen. In diesem Zusammenhang hat es sich bewährt, wenn der Füllstoff ausgewählt ist aus der Gruppe bestehend aus Tonmineralien, Perlit, Phosphaten, Nitraten, Sulfaten, Boraten, Calciumcarbonat, Talkum, Holzmehl, Klärschlämmen und deren Mischungen. Besonders gute Ergebnisse werden in diesem Zusammenhang erhalten, wenn der Füllstoff ausgewählt ist aus der Gruppe bestehend aus Tonmineralien, insbesondere Bentonit, Perlit, Calciumcarbonat, Calciumphosphat, Magnesiumphosphat, Talkum, Holzmehl, Klärschlämmen und deren Mischungen. Im Rahmen der vorliegenden Erfindung wird es insbesondere bevorzugt, wenn der Füllstoff ausgewählt ist aus Tonmineralien, insbesondere Bentonit, Perlit, Calciumcarbonat, Talkum und deren Mischungen. Ganz besonders bevorzugt ist es, wenn Füllstoff ausgewählt ist aus Tonmineralien, insbesondere Bentonit, Perlit und deren Mischungen.

Durch die Verwendung funktionaler Füllstoffe mit bodenverbessernden Eigenschaften wird durch den langsamen biologischen Abbau des Kunststoffs ein Depoteffekt, d.h. eine langsame Freisetzung der Füllstoffe, erreicht.

Im Rahmen der vorliegenden Erfindung kann es weiterhin vorgesehen sein, dass das biologisch abbaubare Compound den Füllstoff in Mengen von 1 bis 40 Gew.-%, insbesondere 2 bis 30 Gew.-%, vorzugsweise 3 bis 25 Gew.-%, bevorzugt 5 bis 20 Gew.-%, bezogen auf das biologisch abbaubare Compound, aufweist.

Gemäß einer bevorzugten Ausführungsform der vorliegenden Erfindung ist es somit vorgesehen, dass das biologisch abbaubare Compound
(i) mindestens ein biologisch abbaubares Polymer, insbesondere in Mengen von 50 bis 95 Gew.-%,
(ii) zuvor beschriebene stabilisierte Huminstoffpartikel, insbesondere in Mengen von 2 bis 40 Gew.-%, und
(iii) mindestens einen Füllstoff, insbesondere in Mengen von 1 bis 40 Gew.-%, jeweils bezogen auf das biologisch abbaubare Compound,
aufweist.

Für diese besondere bevorzugte Ausführungsform gelten alle vorgenannten Merkmale, Vorteile und Besonderheiten, welche im Zusammenhang mit anderen Ausführungsformen aufgezählt wurden, entsprechend.

Des Weiteren ist es möglich, dass das biologisch abbaubare Compund mindestens einen Kompatibilsator (Compatibilizer) aufweist.

Durch Kompatibilisatoren wird die Verträglichkeit der unterschiedlichen Polymere der Polymermischungen einerseits erhöht und andererseits die Kompatibilität zwischen den Polymeren der Polymermischung und den weiteren Inhaltsstoffen der Polymermischung. In der kunststoffverarbeitenden Branche ist es daher üblich, nicht kompatible Stoffe mit sogenannten Kompatibilsatoren (Compatibilizer) zueinander verträglich zu machen, so dass alle gewünschten Eigenschaften zum Tragen kommen können.

Geeignete reaktive und nicht-reaktive Kompatibilsatoren (Compatibilizer) sind dem Fachmann bekannt und er kann in Abhängigkeit der jeweils ausgewählten Polymere und der jeweiligen Anwendungszwecke des Compounds aus einer Vielzahl von Verbindungen auswählen.

Wenn das biologisch abbaubare Compound einen Kompatibilisator aufweist, so ist es üblicherweise vorgesehen, dass das biologisch abbaubare Compound den Kompatibilisator in Mengen von 0,1 Gew.-% bis 10 Gew.-%, insbesondere 0,5 bis 9 Gew.-%, vorzugsweise 1 bis 8 Gew.-%, bevorzugt 2 bis 6 Gew.-%, bezogen auf das biologisch abbaubare Compound, aufweist.

Gemäß einer bevorzugten Ausführungsform der vorliegenden Erfindung ist es vorgesehen, dass das biologisch abbaubare Compound
(i) mindestens ein biologisch abbaubares Polymer, insbesondere in Mengen von 50 bis 95 Gew.-%,
(ii) zuvor beschriebene modifizierte Huminstoffpartikel, insbesondere in Mengen von 2 bis 40 Gew.-%, und
(iii) mindestens einen Kompatibilisator, insbesondere in Mengen von 0,1 bis 10 Gew.-%, jeweils bezogen auf das biologisch abbaubare Compound,
aufweist.

Für diese besondere bevorzugte Ausführungsform gelten alle vorgenannten Merkmale, Vorteile und Besonderheiten, welche im Zusammenhang mit anderen Ausführungsformen aufgezählt wurden, entsprechend.

Gleichermaßen kann es im Rahmen der vorliegenden Erfindung vorgesehen sein, dass das biologisch abbaubare Compound
(i) mindestens ein biologisch abbaubares Polymer, insbesondere in Mengen von 50 bis 95 Gew.-%,
(ii) zuvor beschriebene modifizierte Huminstoffpartikel, insbesondere in Mengen von 2 bis 40 Gew.-%,
(iii) mindestens einen Füllstoff, insbesondere in Mengen von 1 bis 40 Gew.-%, und
(iv) mindestens einen Kompatibilisator, insbesondere in Mengen von 0,1 bis 10 Gew.-%, jeweils bezogen auf das biologisch abbaubaren Compound,
aufweist.

Für diese besondere bevorzugte Ausführungsform gelten alle vorgenannten Merkmale, Vorteile und Besonderheiten, welche im Zusammenhang mit anderen Ausführungsformen aufgezählt wurden, entsprechend.

Darüber hinaus kann es vorgesehen sein, dass das biologisch abbaubare Compound mindestens ein Additiv aufweist. Das Additiv ist dabei üblicherweise ausgewählt aus der Gruppe von Verarbeitungshilfsmitteln, Gleitmitteln, wie niedermolekularen Amiden, Estern bzw. Wachsen; Dispergierhilfsmitteln (Dispergatoren), Tensiden oder oberflächenaktiven Stoffen; Entschäumern; Rheologiemodifizierern; Bioziden; Markerstoffen; Farbstoffen, insbesondere Farbpigmenten; UV-Absorbern; Anticloggingmitteln und Stabilisatoren, insbesondere UV-Stabilisatoren und Säurestabilisatoren, sowie deren Mischungen.

Wenn das biologisch abbaubare Compound ein Additiv aufweist, so ist es üblicherweise vorgesehen, dass das biologisch abbaubare Compound das Additiv in Mengen von 0,1 Gew.-% bis 10 Gew.-%, insbesondere 0,5 bis 9 Gew.-%, vorzugsweise 1 bis 8 Gew.-%, bevorzugt 2 bis 6 Gew.-%, bezogen auf das biologisch abbaubare Compound, aufweist.

Gemäß einer bevorzugten Ausführungsform der vorliegenden Erfindung ist es vorgesehen, dass das biologisch abbaubare Compound
(i) mindestens ein biologisch abbaubares Polymer, insbesondere in Mengen von 50 bis 95 Gew.-%,
(ii) zuvor beschriebene modifizierte Huminstoffpartikel, insbesondere in Mengen von 2 bis 40 Gew.-%,
(iii) mindestens einen Kompatibilisator, insbesondere in Mengen von 0,1 bis 10 Gew.-%, und
(iv) mindestens ein Additiv, insbesondere in Mengen von 0,1 bis 10 Gew.-%, jeweils bezogen auf das biologisch abbaubare Compound
aufweist.

Für diese besondere bevorzugte Ausführungsform gelten alle vorgenannten Merkmale, Vorteile und Besonderheiten, welche im Zusammenhang mit anderen Ausführungsformen aufgezählt wurden, entsprechend.

Gleichermaßen kann es im Rahmen der vorliegenden Erfindung vorgesehen sein, dass das biologisch abbaubare Compound
(i) mindestens ein biologisch abbaubares Polymer, insbesondere in Mengen von 50 bis 95 Gew.-%,
(ii) zuvor beschriebene modifizierte Huminstoffpartikel, insbesondere in Mengen von 2 bis 40 Gew.-%,
(iii) mindestens einen Füllstoff, insbesondere in Mengen von 1 bis 40 Gew.-%,
(iv) mindestens einen Kompatibilisator, insbesondere in Mengen von 0,1 bis 10 Gew.-%, und
(v) mindestens ein Additiv, insbesondere in Mengen von 0,1 bis 10 Gew.-%, jeweils bezogen auf das biologisch abbaubare Compound
aufweist.

Für diese besondere bevorzugte Ausführungsform gelten alle vorgenannten Merkmale, Vorteile und Besonderheiten, welche im Zusammenhang mit anderen Ausführungsformen aufgezählt wurden, entsprechend.

Darüber hinaus kann es vorgesehen sein, dass das biologisch abbaubare Compound mindestens ein anorganisches und/oder organisches Salz, insbesondere ein anorganisches Salz, aufweist. Durch die Verwendung von anorganischen und/oder organischen Salzen, insbesondere anorganischen Salzen, ist es möglich, dem Compound Spurenelemente zuzuführen, welche für das Pflanzenwachstum oder zur Verbesserung des Bodenlebens benötigt werden, wobei es im Rahmen der vorliegenden Erfindung bevorzugt ist, wenn Spurenelemente dem Huminpartikel zugegeben sind.

Besonders bevorzugt das anorganische und/oder organische, vorzugsweise anorganische Salz, ausgewählt aus Salzen von Elementen der ersten bis siebten Hauptgruppe, insbesondere Natrium, Kalium, Magnesium, Calcium, Bor, Selen, Iod und deren Mischungen, der ersten und zweiten Nebengruppe, insbesondere Kupfer, Zink und deren Mischungen, der fünften bis achten Nebengruppe, insbesondere Vanadium, Chrom, Molybdän, Eisen, Mangan, Kobalt und deren Mischungen. Vorzugsweise ist das Salz ein basisches Metallsalz, insbesondere ein Hydroxid, oder enthält das (Spuren-)Element als (komplexes) Anion.

Wenn das biologisch abbaubare Compound mindestens ein anorganisches und/oder organisches Salz, insbesondere ein anorganisches Salz, aufweist, so ist es üblicherweise vorgesehen, dass das biologisch abbaubare Compound das anorganische und/oder organische Salz, insbesondere das anorganische Salz, in Mengen von 0,005 Gew.-% bis 2 Gew.-%, insbesondere 0,05 bis 1 Gew.-%, vorzugsweise 0,1 bis 0,5 Gew.-%, bezogen auf das biologisch abbaubare Compound, aufweist.

Für weitere Einzelheiten zu dem erfindungsgemäßen biologisch abbaubaren Compound kann auf die obigen Ausführungen zu den übrigen Erfindungsaspekten verwiesen werden, welche in Bezug auf das biologisch abbaubare Compound entsprechend gelten.

Wiederum weiterer Gegenstand der vorliegenden Erfindung - gemäß einem **zweit en** Aspekt der vorliegenden Erfindung - ist die Verwendung eines zuvor beschriebenen biologisch abbaubaren Compounds zur Herstellung von Kunststoffprodukten für die Agrar- und Bauwirtschaft.

Insbesondere kann das zuvor beschriebene biologisch abbaubare Compound zur Herstellung von Agrarfolien, vorzugsweise mono- oder biaxial orientierten Agrarfolien, blasgeformten oder spritzgegossenen Formkörpern verwendet werden.

Für weitere Einzelheiten zu der erfindungsgemäßen Verwendung eines biologisch abbaubaren Compounds kann auf die obigen Ausführungen zu den übrigen Erfindungsaspekten verwiesen werden, welche in Bezug auf die erfindungsgemäße Verwendung entsprechend gelten.

Weiterer Aspekt der vorliegenden Erfindung - gemäß einem **dritten** Aspekt der vorliegenden Erfindung - ist ein zuvor beschriebener modifizierter, insbesondere stabilisierter, Huminstoffpartikel, wobei die Oberfläche des Huminstoffpartikels durch mindestens eine grenzflächenaktive und/oder grenzflächenreaktive Verbindung modifiziert ist.

Für weitere Einzelheiten zu dem erfindungsgemäßen Huminstoffpartiekel kann auf die obigen Ausführungen zu den übrigen Erfindungsaspekten verwiesen werden, welche in Bezug auf den erfindungsgemäßen Huminstoffpartikel entsprechend gelten.

Weiterer Aspekt der vorliegenden Erfindung - gemäß einem **vierten** Aspekt der vorliegenden Erfindung - ist die Verwendung eines vorgenannten modifizierten Huminstoffpartikels zur Herstellung biologisch abbaubarer Compounds.

Für weitere Einzelheiten zu der erfindungsgemäßen Verwendung kann auf die obigen Ausführungen zu dem erfindungsgemäßen modifizierten Huminstoffpartikel verwiesen werden, welche für die erfindungsgemäße Verwendung entsprechend gelten.

Weiterer Aspekt der vorliegenden Erfindung - gemäß einem **fünften** Aspekt der vorliegenden Erfindung - ist ein Verfahren zu Herstellung eines modifizierten Huminstoffpartikels, insbesondere eines zuvor beschriebenen modifizierten Huminstoffpartikels, wobei Huminstoffpartikel mikronisiert und den Huminstoffpartikeln vor, während oder nach der Mikronisierung mindestens eine grenzflächenaktive und/oder grenzflächenreaktive Verbindung zugesetzt wird.

Im Rahmen der vorliegenden Erfindung ist es üblicherweise vorgesehen, dass die Huminstoffpartikel durch Mikronisieren, insbesondere durch Feinstvermahlung, zerkleinert und auf vorgewählte Partikelgrößen eingestellt werden.

Die Stabilisierung mittels der grenzflächenaktiven und/oder grenzflächenreaktiven Verbindung kann dabei derart erfolgen, dass die grenzflächenaktive und/oder grenzflächenreaktive Verbindung den Huminstoffen vor der Mikronisierung, während der Mikronisierung oder auch unmittelbar nach der Mikronisierung zugegeben wird. Vorzugsweise wird die grenzflächenaktive und/oder grenzflächenreaktive Verbindung den Huminstoffpartikeln während oder nach der Mikronisierung zugegeben. Auf diese Weise kann eine ungewünschte Alterung der Huminstoffpartikel ausgeschlossen bzw. minimiert werden.

Üblicherweise ist es vorgesehen, dass die Mikronisierung durch die Verwendung von kryogenen Stiftmühlen, Stiftmühlen Luftwirbelmühlen oder Kugelmühlen erfolgt.

Die Mikronisierung der Huminstoffe kann beispielsweise durch kryogenes Mahlen mit Stiftmühlen mit Umfanggeschwindigkeiten von bis zu 150 m/s, bevorzugt 170 m/s, bevorzugt bis zu 200 m/s, erfolgen. Gleichermaßen ist es möglich, dass die Mikronisierung durch Vermahlung in Luftwirbelmühlen des Typs Ultrarotor, stattfindet. Darüber hinaus kann es auch vorgesehen sein, dass die Vermahlung in Luftwirbelmühlen eines Ultrarotors und bei zeitgleicher Trocknung feuchter Edukte erfolgt.

Im Rahmen der vorliegenden Erfindung kann es gleichfalls vorgesehen sein, dass im Anschluss an die Herstellung der modifizierten Huminstoffpartikel eine Klassierung durchgeführt wird. Auf diese Weise wird gewährleistet, dass die passenden Partikelgrößen für den jeweiligen Anwendungszweck des Compounds ausgewählt werden kann.

Im Rahmen der vorliegenden Erfindung ist es üblicherweise vorgesehen, dass die grenzflächenaktive oder grenzflächenreaktive Verbindung mit den Huminstoffpartiklen gemischt wird. Vorzugsweise erfolgt die Mischung entweder während des Mahlvorgangs oder im Anschluss an den Mahlvorgang.

Im Rahmen der vorliegenden Erfindung kann die Mikronisierung als Trockenvermahlung oder als Nassvermahlung durchgeführt werden.

Bei Nassvermahlungen empfiehlt es sich, die grenzflächenaktive und/oder grenzflächenreaktive Verbindung über die Flüssigphase beim Aufkonzentrations- und/oder Trocknungsprozess aufzugeben.

Bei Trockenvermahlungen kann die grenzflächenaktive und/oder grenzflächenreaktive Verbindung in den abführenden Teilchenstrom eingeblasen werden. Hierbei sind insbesondere zwei Varianten durchführbar, nämlich Einsprühen eines flüssigen Additivs, welches auf die Partikel aufzieht, oder Einsprühen einer Lösung und Verdampfung des Lösemittels im weiteren Prozessgang wobei - je nach Art und Reaktivität des Additives - in einem thermischen Verfahrensschritt dieses an den Huminstoff angebunden wird.

Mikronisierte Huminstoffe, die noch nicht gealtert sind, können auch als Dryblend mit einer grenzflächenaktiven und/oder grenzflächenreaktiven Verbindung versehen werden, wobei unterschiedliche Techniken des Mischens angewendet werden können: zum Beispiel Trommelmischer oder Heiß-Kalt-Mischer.

Grenzflächenreaktive Verbindungen werden vorzugsweise als konzentrierte Lösung in ein beheiztes Mischsystem gegeben und das Lösungsmittel im Vakuum entfernt.

Darüber hinaus kann es vorgesehen sein, dass den Huminstoffen vor, während oder nach der Mikronisierung Füllstoffe und/oder Additive zugegeben werden. Vorzugsweise erfolgt die Zugabe der Füllstoffe und/oder Additive vor oder während der Mikronisierung.

Weiterhin ist es möglich, dass die Huminstoffpartikel einer Trocknung unterzogen werden.

Huminstoffe fallen durch ihre Gewinnung oder durch Aufbereitungsschritte oftmals mit höheren Gehalten an Feuchtigkeit an, die je nach eingesetzter Menge in einem biologisch abbaubaren Compound und je nach Prozesstemperaturen verringert werden müssen. Die Entfernung von Wasser aus Polyelektrolyten stellt insbesondere bei Strukturen im niedrigen Mikrometer oder Submikrometerbereich Bereiche ein Problem dar.

Feuchtigkeit enthaltende Huminstoffpartikel können beispielhaft mittels Luftwirbelmühlen, beispielsweise vom Typ Ultra Rotor, während des Mahlens soweit getrocknet werden, dass im eigentlichen Prozessschritt der Compoundierung bei Temperaturen im Bereich von 120 bis 180 °C, Restgehalte an Feuchtigkeit über eine Vakuumentgasung entfernt werden kann, so dass die Polyesterstruktur des biologisch abbaubaren Compounds nicht depolymerisiert wird.

Ein weiterer Weg ist die Hintereinanderschaltung eines Trocknungsprozesses mit einer Siebstrahltechnik.

Geringe Mengen Feuchtigkeit könne mittels Vakuumentgasung während der Compoundierung entfernt werden.

Für weitere Einzelheiten zu den erfindungsgemäßen Verfahren kann auf die obigen Ausführungen zu den weiteren Erfindungsaspekten verwiesen werden, welche in Bezug auf das erfindungsgemäße Verfahren entsprechend gelten.

Schließlich ist weiterer Aspekt der vorliegenden Erfindung - gemäß einem **sechsten** Aspekt der vorliegenden Erfindung - ein Verfahren zur Herstellung vorgenannter Huminstoffpartikel, wobei zunächst eine Lösung bzw. feinteilige Dispersion von Huminstoffen, insbesondere von Fulvinsäuren, Huminsäuren und deren Mischungen, mit mindestens einer grenzflächenaktiven und/oder grenzflächenreaktiven Verbindung versetzt wird und die resultierende Mischung anschließend zu Partikeln verarbeitet wird.

Die Verarbeitung zu Partikeln kann dabei insbesondere mittels Sprühtrocknung erfolgen.

Der Lösung oder Dispersion der Huminstoffe können insbesondere noch weitere gewünschte Füllstoffe und Additive, insbesondere zur Dotierung der Huminstoffe mit Spurenelementen, zugesetzt werden. Die Granulierung, insbesondere Sprühtrocknung kann dabei in üblichen Sprühtrockentürmen erfolgen.

Für weitere Einzelheiten zu dem erfindungsgemäßen Verfahren kann auf die obigen Ausführungen zu den übrigen Erfindungsaspekten verwiesen werden, welche in Bezug auf das erfindungsgemäße Verfahren entsprechend gelten.

Der Gegenstand der vorliegenden Erfindung wird nachfolgend anhand der Ausführungsbeispiele exemplarisch und in nicht beschränkender Weise erläutert.

### Ausführungsbeispiele

### 1. Herstellung modifizierter Humoinstoffpartikel

### 1.1. Einstellung der Partikelgröße

2 Huminstoffe aus unterschiedlichen Quellen wurden kommerziell bezogen und vermahlen. Die Partikelgrößen wurden vor und nach dem Mahlvorgang bestimmt.

Die Huminstoffe wurden mit einer semiindustriellen gegenläufigen Stiftmühle vom Typ GSM 250 der Firma Gotic GmbH (Gerstetten, Deutschland) bei einer Drehzahl von 7500 U/min (beidseitig), was 175 m/s (äußerer Stiftring) entspricht, fein gemahlen.

Die Zugabe des Materials erfolgte von Hand, nach leichter Vorkühlung mit N₂ auf 0 bis 5 °C und Inertisierung der Mühle mit flüssigem Stickstoff.

Die volumenbasierten Größen der Huminstoffpartikel vor und nach dem Mahlvorgang wurden mit dem Masterizer 2000 Typ Hydro 2000S von Malvern Panalytical (Malvern, Vereinigtes Königreich) gemessen und sind in Tabelle 1 dargestellt.

**Tab. 1: Volumenbasierte Partikelgrößen der Huminstoffe vor und nach dem Mahlvogang**

| **Huminstoff** | | **d(0,1) [µm]** | **d(0,5) [µm]** | **d(0,9) [µm]** | **d(4,3)¹ [µm]** |
|---|---|---|---|---|---|
| **Huminstoff 1** | vor Mahlen | 12,8 | 80,0 | 3196 | 126 |
| | nach Mahlen | 3,7 | 18,8 | 55,5 | 27,3 |
| **Huminstoff 2** | vor Mahlen | 21,3 | 266 | 902 | 374 |
| | nach Mahlen | 8,0 | 36,3 | 140,7 | 58,9 |

| | | | | | |
|---|---|---|---|---|---|
| ¹: Volumenbezogenes Mittel | | | | | |

Die eingesetzten Huiminstoffe wurden darüber hinaus im Hinblick auf ihre Säurefunktionalitäten und chemische Zusammensetzung charakterisiert. Die Daten sind in den nachfolgenden Tabellen 2 und 3 wiedergegeben.

**Tab. 2: Gehalt an Säurefunktionen in den untersuchten Huminstoffen**

| **Funktionelle Gruppe [mmol/g]** | **Huminstoff 1** | **Huminstoff 2** | **Lit.^{2,3}** |
|---|---|---|---|
| Säure gesamt | 5,9 | 4,2 | 5,6 - 7,7 |
| COOH | 3,1 | 1,7 | 1,5 - 5,7 |
| Phenolische OH | 2,8 | 2,5 | 2,1 - 5,7 |

| | | | |
|---|---|---|---|
| ²: M. Schnitzer. Recent findings on the characterisation of humic substances extracted from soils from widely differing climatic zones. *Soil Organic Matter Studies;* Vienna, 1977; pp 117-131. ³: S. S. Fong, M. Mohamed. Chemical characterization of humic substances occurring in the peats of Sarawak, Malaysia. *Organic Geochemistry* **2007,** *38*, 967-976. | | | |

**Tab. 3: Chemische Zusammensetzung der untersuchten Huminstoffe**

| **Huminstoff** | **C [%]** | **H [%]** | **O [%]** | **Wasser [%]** | **N/C** | **H/C** | **O/C** | **F** | **M_{w,min}** |
|---|---|---|---|---|---|---|---|---|---|
| **Huminstoff 1** | 56,0 | 3,5 | 33,7 | 15,7 | 0,01 | 0,74 | 0,45 | C₆₇H₄₈ O₂₈N | 1314 |
| **Huminstoff 2** | 65,0 | 4,4 | 27,6 | 33,1 | 0,01 | 0,81 | 0,32 | C₇₇H₆₂ O₂₄N | 1384 |

In Tabelle 4 sind die bestimmten Partikelgrößenverteilungen von kommerziell erhältlichen Huminstoffpräparaten aufgeführt. Es zeigt sich, dass diese Präparate deutlich größere Partikelgrößen aufweisen und zur Einarbeitung in Compounds nicht geeignet sind.

**Tab. 4: Partikelgrößen kommerziell erhältlicher Huminstoffprodukte**

| **Huminstoff** | **d(0,1) [µm]** | **d(0,5) [µm]** | **d(0,9) [µm]** | **d(4,3)* [µm]** |
|---|---|---|---|---|
| **"flüssiger Bodenverbesserer"** | 119 | 585 | 1121 | 614 |
| **(getrocknet) (Humin+Fulvosäuren in Flüssigkeit Spezifikation <5 µm)** | | | | |
| **"flüssiges Pflanzenstärkungsmittel" (getrocknet) (Kalium-Humate in Flüssigkeit Spezifikation 100-150µm)** | 156 | 406 | 778 | 441 |
| **Humusgranulat (mit guter Wasserlöslichkeit nach Datenblatt, 80-85 K-Humate)** | 351 | 764 | 1358 | 809 |
| **Mit Spurenstoff beladenes Granulat (K-Humate mit Fe-Humate)** | 185 | 656 | 1274 | 703 |

### 1.2. Modifizierung der Huminstoffpartikel

Die gemäß 1.1 mikronisierten Huminstoffpartikel wurden klassiert, sodass die Oberkorngrenze 20 µm beträgt.

Die klassierten Huminstoffpartikel wurden anschließend mit Epoxiden modifiziert.

Die Reaktionen wurden in festem Zustand mit unterschiedlichen Mengen an Epoxiden, nämlich 2, 5 und 7 Gew.-% Epoxyverbindng, bezogen auf die Menge an Huminstoff, durchgeführt. Dazu wurden die Epoxide in einer geringen Menge Aceton gelöst und der feste Huminstoff sowie die gelösten Epoxide in einen Rotationsverdampferkolben überführt. Die Reaktion wurde dann in einem Rotationsverdampfer bei 80 °C (130 °C für Ipox CL 12) für 3 h und 800 mbar durchgeführt. Anschließend wurden die Mischungen 4,5 Stunden lang mit einem Soxhlet-Extraktionssystem mit Aceton extrahiert, um die nicht inkorporierten Epoxide abzutrennen. Schließlich wurden die extrahierten Proben über Nacht an der Luft getrocknet und mittels FTIR-Spektroskopie und TG charakterisiert.

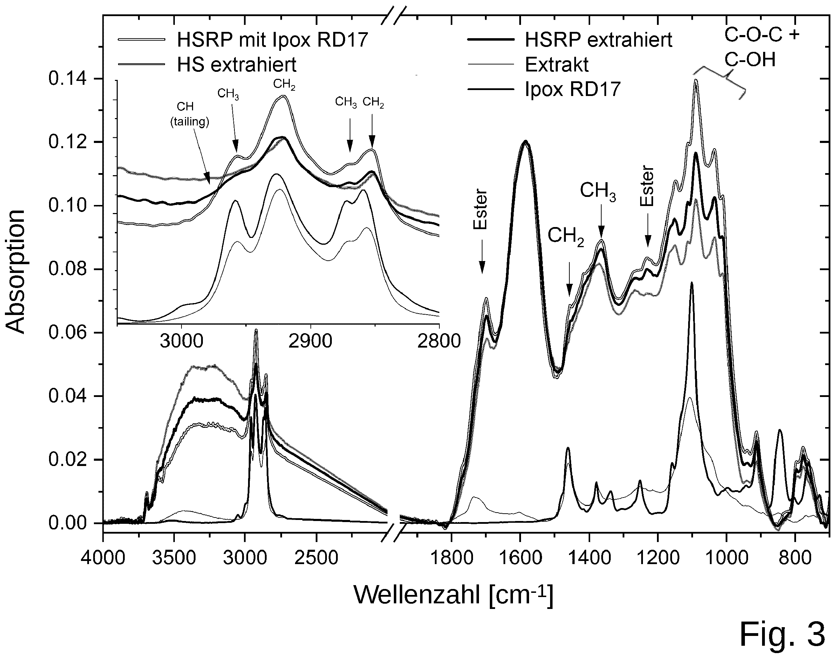

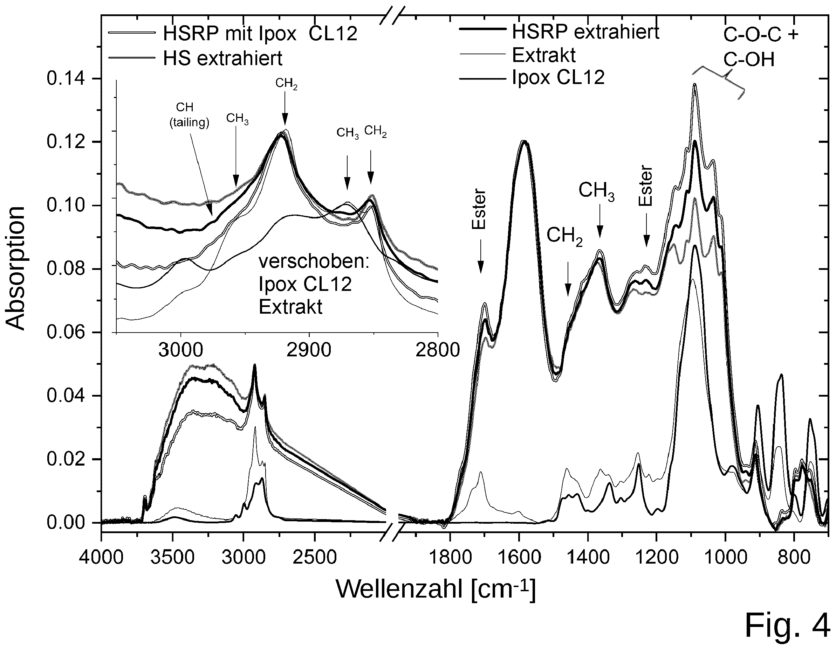

In den Figuren 3 und 4 sind die Spektren der FTIR-spektroskopischen Untersuchungen dargestellt.

Fig. 3 zeigt das Spektrum des Reaktionsprodukts eines Huminstoffs mit Ipox RD 17 (2-Ethyl-Hexylglycidylether der Firma IPOX Chemicals GmbH). Fig. 3 zeigt insbesondere das Spektrum des Umsetzungsprodukts eines Huminstoffs mit Ipox RD 17 vor der Extraktion mit Aceton (HSRP mit Ipox RD 17), das Spektrum des Umsetzungsprodukts eines Huminstoffs mit Ipox RD 17 nach der Extraktion mit Aceton (HSRP extrahiert) und das Spektrum des Extrakts (Extrakt). Zum Vergleich sind die Spektren des mit Aceton extrahierten reinen Huminstoffs (HS extrahiert) und von Ipox RD 17 (Ipox RD 17) dargestellt. Der Wellenzahlenbereich von 2.800 bis 3.100 cm⁻¹ ist zur Verdeutlichung nochmals gespreizt dargestellt. Insbesondere an den Absorptionsbanden bei ca. 1.750 cm⁻¹ und 1.250 cm⁻¹ der Spektren von "HSRP mit Ipox RD 17" und "HSRP extrahiert" zeigt sich, dass die Epoxide durch Veresterung an den Huminstoff gebunden wurden.

Fig. 3 zeigt das Spektrum des Reaktionsprodukts eines Huminstoffs mit Ipox CL 12 (Glycerin-Polyglycidylether der Firma IPOX Chemicals GmbH). Fig. 3 zeigt insbesondere das Spektrum des Umsetzungsprodukts eines Huminstoffs mit Ipox CL 12 vor der Extraktion mit Aceton (HSRP mit Ipox CL 12), das Spektrum des Umsetzungsprodukts eines Huminstoffs mit Ipox CL 12 nach der Extraktion mit Aceton (HSRP extrahiert) und das Spektrum des Extrakts (Extrakt). Zum Vergleich sind die Spektren des mit Aceton extrahierten Huminstoffs (HS extrahiert) und von Ipox CL 12 (Ipox CL 12) dargestellt. Der Wellenzahlenbereich von 2.800 bis 3.100 cm⁻¹ ist zur Verdeutlichung nochmals gespreizt dargestellt, wobei die Spektren von Ipox CL 12 und des Extrakts zur besseren Vergleichbarkeit entlang der y-Achse verschoben wurden. Insbesondere an den Absorptionsbanden bei ca. 1.750 cm⁻¹ und 1.250 cm-1 der Spektren von "HSRP mit Ipox CL 12" und "HSRP extrahiert" zeigt sich, dass die Epoxide durch Veresterung an den Huminstoff gebunden wurden.

### 2. Compounds

Die erfindungsgemäßen modifizierten Huminstoffpartikel können in verschiedenste Compounds eingearbeitet werden, wie nachfolgend exemplarisch gezeigt.

### 0 Rezeptur nach dem Stand der Technik

| | |
|---|---|
| Copolyester des Typs Polybutylen-adipat-coterephtalat | 60 % |
| Polylactid | 10 % |
| Füllstoff des Typs Calciumcarbonat (Kreide) | 17 % |
| Füllstoff des Typs Magnesiumsilikat (Talkum) | 9 % |
| Additive bzw. Compatibilizer | 4 % |

### A Rezeptur für eine Abbaurate von 50% während einer Vegetationsperiode

| | |
|---|---|
| Copolyester des Typs Polybutylen-adipat-coterephtalat | 60 % |
| Polylactid | 14 % |
| Huminstoff des Typs Fulvinsäure | 10 % |
| Huminstoff des Typs Huminsäure | 5 % |
| Füllstoff des Typs Magnesiumsilikat (Talkum) | 5 % |
| Additive und Compatibilizer des Typs Lignosulfonat | 6 % |

### B1 Rezeptur für eine Abbaurate < 50% während einer Vegetationsperiode

| | |
|---|---|
| Copolyester des Typs Polybutylen-adipat-coterephtalat | 60 % |
| Huminstoff des Typs Huminsäure | 10 % |
| Huminstoff des Typs Humin | 5 % |
| Füllstoff des Typs Dolomit (Calciummagnesiumcarbonat) | 15 % |
| Füllstoff des Typs Calciumphosphat | 4 % |
| Additive und Compatibilizer des Typs Lignosulfonat | 6 % |

### B2 Rezeptur für eine Abbaurate > 50% während einer Vegetationsperiode

| | |
|---|---|
| Copolyester des Typs Polybutylen-succinat-coterephtalat | 60% |
| Polylactid | 14 % |
| Huminstoff des Typs Fulvinsäuren | 10 % |
| Füllstoff des Typs Magnesiumphosphat | 5 % |
| Additive | 3 % |
| Compatibilizer des Typs Lignosulfonat | 8 % |

### C 50% während einer Vegetationsperiode, stoffspezifisch beschleunigt

| | | |
|---|---|---|
| Copolyester des Typs Polybutylen-succinat | 50 % | |
| Polylactid | 18 % | |
| Huminstoff des Typs Huminsäuren | | 5 % |
| Füllstoff des Typs Calciumphosphat | | 5 % |
| Füllstoff des Typs Benonit | 4 % | |
| Additive | 1 % | |
| Compatibilizer des Typs Lignosulfonat | 4 % | |

### I. Beispielhafte Rezeptur Flachfolie

| | |
|---|---|
| PLA | 60 |
| PBS | 15 |
| Huminsäure/Humat | 20 |
| Additive | 5 |

### II. Beispielhafte Rezeptur Spritzguss (langsam abbauend)

| | |
|---|---|
| PLA | 60 |
| PBS | 15 |
| Huminsäure/Humat | 20 |
| Additive | 5 |

### III. Beispielhafte Rezeptur Spritzguss schnell abbauend)

| | |
|---|---|
| PLA | 36 |
| PBS | 48 |
| Huminsäure/Humat | 23 |
| Additive | 3 |

### IV. Rezeptur für ein Mikrogranulat, welches direkt ausgebracht werden kann

| | |
|---|---|
| PLA | 62 |
| PBAT | 5 |
| PHBV | 5 |
| Huminstoff | 25 |
| Additive | 3 |

## Patentansprüche

1. Biologisch abbaubares Compound, aufweisend
(i) mindestens ein biologisch abbaubares Polymer in Mengen von 50 bis 95 Gew.-%,
und
(ii) modifizierte, insbesondere stabilisierte, Huminstoffpartikel, in Mengen von 2 bis 40 Gew.-%, jeweils bezogen auf das biologisch abbaubare Compound,
wobei die Oberfläche der Huminstoffpartikel durch mindestens eine grenzflächenaktive und/oder grenzflächenreaktive Verbindung modifiziert ist.

2. Biologisch abbaubares Compound nach Anspruch 1, **dadurch gekennzeichnet, dass** die eine grenzflächenaktive und/oder grenzflächenreaktive Verbindung ausgewählt ist aus der Gruppe bestehend aus Netz- oder Dispergiermitteln, Ligninderivaten, insbesondere Lignosulfonaten, Polyuroniden, Epoxyverbindungen und deren Mischungen.

3. Biologisch abbaubares Compound nach Anspruch 2, **dadurch gekennzeichnet, dass** das Netz- oder Dispergiermittel ausgewählt ist aus der Gruppe bestehend aus organomodifizierten (Poly-)Siloxanen, Polyethern, Polyestern, Polyetherestern, Polycarboxlaten, Polyamiden, Polyurethanen, Fettsäurecopolymeren, modifizierten natürlichen Ölen, Tensiden und deren Mischungen.

4. Biologisch abbaubares Compound nach einem der vorangehenden Ansprüche, **dadurch gekennzeichnet, dass** der modifizierte Huminstoffpartikel die grenzflächenaktive und/oder grenzflächenreaktive Verbindung in Mengen von 1 bis 50 Gew.-%, insbesondere 2 bis 30 Gew.-%, vorzugsweise 3 bis 25 Gew.-%, bevorzugt 4 bis 20 Gew.-%, besonders bevorzugt 5 bis 15 Gew.-%, bezogen auf den modifizierten Huminstoffpartikel, aufweist.

5. Biologisch abbaubares Compound nach einem der vorangehenden Ansprüche, **dadurch gekennzeichnet, dass** der modifizierte Huminstoffpartikel mindestens einen Huminstoff ausgewählt aus der Gruppe von Fulvinsäuren, Huminsäuren, Huminen und deren Salzen und Mischungen aufweist.

6. Biologisch abbaubares Compound nach Anspruch 5, **dadurch gekennzeichnet, dass** der stabilisierte Huminstoffpartikel den Huminstoff in Mengen von 40 bis 99 Gew.-%, insbesondere 50 bis 98 Gew.-%, vorzugsweise 60 bis 97 Gew.-%, bevorzugt 70 bis 96 Gew.-%, besonders bevorzugt 90 bis 95 Gew.-%, bezogen auf den modifizierten Huminstoffpartikel, aufweist.

7. Biologisch abbaubares Compound nach einem der vorangehenden Ansprüche, **dadurch gekennzeichnet, dass** der modifizierte Huminstoffpartikel mikronisiert ist.

8. Biologisch abbaubares Compound nach einem der vorangehenden Ansprüche, **dadurch gekennzeichnet, dass** der modifizierte Huminstoffpartikel eine Oberkorngrenze von 20 µm, insbesondere 10 µm, vorzugsweise 5 µm, bevorzugt 2 µm, besonders bevorzugt 1 µm, aufweist.

9. Biologisch abbaubares Compound nach einem der vorangehenden Ansprüche, **dadurch gekennzeichnet, dass** das biologisch abbaubare Polymer ausgewählt ist aus der Gruppe von Polyestern, Polyethern, Polyetherestern, Polycarboxylaten, Polyamiden, Polyurethanen, polymeren Kohlenhydraten und deren Mischungen.

10. Biologisch abbaubares Compound nach einem der vorangehenden Ansprüche14, **dadurch gekennzeichnet, dass** das biologisch abbaubare Compound das biologisch abbaubare Polymer in Mengen von 55 bis 95 Gew.-%, vorzugsweise 60 bis 90 Gew.-%, bevorzugt 65 bis 85 Gew.-%, bezogen auf das biologisch abbaubare Compound, aufweist.

11. Biologisch abbaubares Compound nach einem der vorangehenden Ansprüche, **dadurch gekennzeichnet, dass** das biologisch abbaubare Compound den stabilisierten Huminstoff in Mengen von 3 bis 35 Gew.-%, vorzugsweise 4 bis 30 Gew.-%, bevorzugt 5 bis 25 Gew.-%, bezogen auf das biologisch abbaubare Compound, aufweist.

12. Biologisch abbaubares Compound nach einem der vorangehenden Ansprüche, **dadurch gekennzeichnet, dass** das biologisch abbaubare Compound mindestens einen Füllstoff aufweist.

13. Biologisch abbaubares Compound nach Anspruch 12, **dadurch gekennzeichnet, dass** das biologisch abbaubare Compound den Füllstoff in Mengen von 1 bis 40 Gew.-%, insbesondere 2 bis 30, vorzugsweise 3 bis 25 Gew.-%, bevorzugt 5 bis 20 Gew.-%, bezogen auf das biologisch abbaubare Compound, aufweist.

14. Biologisch abbaubares Compound nach Anspruch 12 oder 13, **dadurch gekennzeichnet, dass** der Füllstoff ausgewählt ist aus mineralischen Füllstoffen, organischen Füllstoffen und deren Mischungen, insbesondere wobei der Füllstoff ausgewählt ist aus der Gruppe bestehend aus Tonmineralien, Perlit, Phosphaten, Nitraten, Sulfaten, Boraten, Calciumcarbonat, Talkum, Holzmehl, Klärschlämmen und deren Mischungen, vorzugsweise ausgewählt ist aus der Gruppe bestehend aus Tonmineralien, insbesondere Bentonit, Perlit, Calciumcarbonat, Calciumphosphat, Magnesiumphosphat, Talkum, Holzmehl, Klärschlämmen und deren Mischungen.

15. Biologisch abbaubares Compound nach einem der Ansprüche 13 bis 19, **dadurch gekennzeichnet, dass** das biologisch abbaubare Compound mindestens einen Kompatibilsator aufweist.

16. Biologisch abbaubares Compound nach Anspruch 20, **dadurch gekennzeichnet, dass** das biologisch abbaubare Compound den Kompatibilsator in Mengen von 0,1 Gew.-% bis 10 Gew.-%, insbesondere 0,5 bis 9 Gew.-%, vorzugsweise 1 bis 8 Gew.- %, bevorzugt 2 bis 6 Gew.-%, bezogen auf das biologisch abbaubare Compound, aufweist.

17. Verwendung eines biologisch abbaubaren Compounds nach einem der vorangehenden Ansprüche zur Herstellung von Kunststoffprodukten für die Agrar- und Gartenbauwirtschaft, insbesondere von Agrarfolien, vorzugsweise mono- oder biaxial orientierten Agrarfolien, sowie blasgeformten oder spritzgegossenen Formkörpern.
